# EUROPEAN PATENT SPECIFICATION

(11) **EP 0 588 534 B1**
(45) Date of publication and mention of the grant of the patent: **02.12.1998**
(21) Application number: 93306945.2
(22) Date of filing: 02.09.1993
(51) Int. Cl.: C09D 11/10, B41M 1/26

(54) **Radiation curing ink**
Strahlenhärtbare Tinte
Encre durcissable par irradiation

(30) Priority: 14.09.1992 JP 269146/92
(43) Date of publication of application: 23.03.1994
(73) Proprietor: HAYAKAWA RUBBER COMPANY LIMITED, Fukuyama City, Hiroshima 721 (JP); Yoshino Kogyosho Co., Ltd., Tokyo 136-8531 (JP)
(72) Inventor: Tanaka, Ban, Toyota, Aichi (JP); Nii, Hiroki, Fukuyama, Hiroshima (JP); Yamada, Kosaku, Tempaku-ku, Nagoya, Aichi (JP); Kushida Hideo, Yachiyo-Shi, Chiba (JP); Miya, Takashi, Kamagaya-Shi, Ciba (JP); Koshio, Shuichi, Sakura-Shi, Chiba (JP); Hayakawa, Tadashi, Hanamigawa-ku, Chiba-Shi, Chiba (JP)
(74) Representative: Crouch, David John

(56) References cited:
- EP-A- 0 243 605
- DE-A- 3 303 784
- US-A- 5 091 440

## Description

The present invention relates to a radiation-curable type printing ink for use in directly printing trade names, designs, explanatory notes, bar code, etc. on a plastics material product and, if desired, on a roughened surface of the plastics material product, for displaying and decorating. The printed ink quickly cures on a high-speed drying line to form a dried film capable of maintaining the quality required at the distribution stage. After collection of the used product, the film can be dissolved or removed with an aqueous alkaline solution so that the base materials are recovered in a clean condition.

Furthermore, the present invention relates to the radiation-curable type printing ink for use in displaying and decorating trade names, designs, explanatory notes, bar code, etc. on specific thermoplastics material products, such as polyethylene terephthalate resin products.

Thermoplastics resin products, particularly polyethylene terephthalate products, have been utilised for various applications especially for containers, since they are free from toxicity, superior in gas-barrier ability and water-impermeability to other synthetic resins and have an exterior appearance similar to that of glass, and the like. Such applications include containers for cosmetics, toiletries, liquid seasonings, drinks such as beer or cola, medicine, detergents, and the like. In many cases, explanatory notes and trade names have been printed on the side wall of the container body using a printing ink with an ultraviolet-curable type resin as a vehicle.

In recent years, the environment has become a matter of worldwide concern, and industrial waste, in particular, the dumping of industrial products on a large scale, has attracted public attention, which requires urgent countermeasures for its reduction. With certain industrial products, such as metal and glass, etc, the collection of used products has commenced and, while it is somewhat imperfect as yet the volume of waste is now decreasing.

However, such a recovery system has not been applied to any plastics material products partly because most of them are combustible. This is because various types of plastics material products are discarded as lump-sum "plastic" since it is difficult to classify many plastics material products by their types. In cases where the plastics material is classified by its type and collected in groups of each type separately, it may be utilised as a secondary product upon processing for re-use so that loss of thermal energy in incineration as well as pollution of the atmosphere with CO₂ gas can be prevented. Thereby, a greater contribution may be expected in cleaning the environment.

Plastics material, especially the reproducible thermoplastic resins, are the industrial products that are worth recovering. But many plastics material products contain various additives depending upon application purposes and end-usage, and the composition is not always uniform even if classified in the same resin category.

Among them, plastics material containers have a relatively stable composition even though they contain some quantity of additives to prevent deterioration in the quality of the contents, which makes the approach to re-use easier. Containers made of polyethylene terephthalate, in particular, are utilised as transparent containers for drinks on a large scale and the early implementation of a system for their collection and re-use stands a better chance as one of the products to be collected in a route which is a reverse of the sales channel and similar to that for glass bottles.

One obstacle in the collection and re-use of such containers is their decoration, i.e. labelling or printing of marks, figures, explanatory notes and the like to display a trading image. An immediate task is how to conduct a total removal of the decorative portions without any sorting work after collection to restore an original shape to the container materials.

Previous ink compositions which do not have the advantages of the present invention are described in EP-A-0243605, DE-A-3303784 and US-A-5091440.

The present invention has addressed this problem by introducing a radiation-curable type ink removable in a short time by an aqueous alkaline solution as applied in the case of removing a paper label as one of the measures to deal with the outstanding task.

The present invention is directed to a radiation-curable ink composition which comprises a vehicle mixture comprising:
(A) at least one ingredient selected from the group consisting of a linear polyester oligomer substantially free of an acid group and free of a polymerisable double bond on the linear polyester chain, wherein 1 to 10 double bonds are pendent from the linear polyester chain; a linear polyester polymer substantially free of an acid group and free of a polymerisable double bond on the linear polyester chain, wherein 1 to 10 double bonds are pendent from the linear polyester chain; and mixtures thereof.
(B) at least one ingredient selected from the group consisting of a one double bond-containing carboxylic acid wherein the acid has at least one acid group, a carboxylic ester of the said acid, a carboxylic amide of the said acid, and mixtures thereof,
(C) a double bond-containing polycarboxylic ester wherein 2 to 10 acid groups are present and at least 2 double bonds are pendent from the carboxylic ester having 2 to 10 acid groups,
(D) at least one ingredient selected from the group consisting of a double bond-containing fluorinated carboxylic ester, a block copolymer comprising a fluorinated alkyl group-containing polymer segment and a methacrylic or acrylic polymer segment, a block copolymer comprising a siloxane group-containing polymer segment and a methacrylic or acrylic polymer segment, and mixtures thereof,
(E) a double bond-containing carboxylic ester having at least 2 double bonds and free of an acid group, provided that it is excluded from the above-mentioned component (A), and
(F) at least one ingredient selected from the group consisting of a one double bond-containing carboxylic ester free of an acid group; a one double bond-containing carboxylic amide free of an acid group; a one double bond-containing carboxylic imide free of an acid group; and mixtures thereof,
wherein the acid value of the vehicle mixture is from 5 to 100.

The radiation-curable type ink composition according to the present invention is used not only for the purpose of protecting base surfaces and functional parts temporarily but also mainly for marking so that printed items which are necessary during distribution processes and for the consumer, such as trade names, designs for enhancing trading image, remarks on the contents, explanatory notes on handling, manufacturer's names, bar codes and the like can be kept in a stable condition and, upon their collection, the prints can be removed easily by a certain method to enable the collection and re-use of plastics materials.

The radiation-curable type ink composition according to the present invention is characterised in that the mixture of the above-mentioned (A) to (F) components is the major vehicle ingredient wherein the acid value of the vehicle mixture is from 5 to 100.

In an aspect of the present invention, the alkali-detachable radiation-curable type ink according to the present invention is preferably produced by adding 0 to 20 parts by weight of a photopolymerisation initiator, 0 to 20 parts by weight of a photosensitizer, 0 to 100 parts by weight of an organic and/or inorganic pigment, if necessary a small amount of additives including a surfacer (levelling agent), a defoamer (anti-foaming agent), a slipping agent, a thermal polymerisation inhibitor, and the like to 100 parts by weight of the above-mentioned vehicle, and by kneading it well using a dispersing machine such as a roll mill, a dissolver, a ball mill and the like.

The radiation-curable type ink composition according to the present invention is also characterized in that the mixture of the above-mentioned (A) to (F) components is the major vehicle ingredient wherein the acid value of the vehicle mixture is from 5 to 100 and the ink composition comprises additionally 0 to 20 parts by weight of a photopolymerisation initiator, 0 to 20 parts by weight of a photosensitiser, 0 to 50 wt% of an organic and/or inorganic pigment, and, if necessary, a small amount of additives including a surfacer, a defoamer, a slipping agent, a thermal polymerisation inhibitor, and the like per total ink compostiton.

In a representative embodiment of the present invention, the radiation-curable type ink composition comprises:
(1) the above-mentioned (A) to (C) and (E) to (F) components and, as the (D) component, a double bond-containing fluorinated carboxylic ester wherein the fluorine component is oriented on the surface of copolymer or polymer to give water-repellency, or
(2) the above-mentioned (A) to (C) and (E) to (F) components and, as the (D) component, a block copolymer which comprises a surface-oriented and water-repellent fluorinated alkyl group containing polymer segment and an acrylic polymer segment, or
(3) the above-mentioned (A) to (C) and (E) to (F) components and, as the (D) component, a block copolymer which comprises a surface-oriented and water-repellent siloxane group-containing polymer segment and a methacrylic or acrylic polymer segment,
wherein the acid value of the vehicle mixture is from 5 to 100 and the ink composition comprises additionally 0 to 20 parts by weight of a photopolymerisation initiator, 0 to 20 parts by weight of a photosensitiser, and 0 to 100 parts by weight of an organic and/or inorganic pigment to 100 parts by weight of the above-mentioned vehicle.

The present invention is also directed to a radiation-curable type printing ink composition which comprises the mixture of the above mentioned (A) to (C) and (E) to (F) components and, as the (D) component, two or three members selected from the group consisting of a double bond-containing fluorinated carboxylic ester acid wherein the fluorine component is oriented on the surface of a copolymer or polymer to give water-repellency, a block copolymer which comprises a surface-oriented and water-repellent fluorinated alkyl group-containing polymer segment and a methacrylic or acrylic polymer segment, and a block copolymer which comprises a surface-oriented and water-repellent siloxane group-containing polymer segment and a methacrylic or acrylic polymer segment, wherein the acid value of the vehicle mixture is from 5 to 100 and the ink composition comprises additionally 0 to 20 parts by weight of a photopolymerisation initiator, 0 to 20 parts by weight of a photosensitiser, and 0 to 100 parts by weight of an organic and/or inorganic pigment to 100 parts by weight of the above-mentioned vehicle.

In a preferred embodiment of the present invention, 0 to 60 parts by weight of an organic and/or inorganic pigment to 100 parts by weight of the above-mentioned vehicle may be used.

In the case of the printing method according to the present invention, printing may be possible without any surface treatment of the thermoplastic resin product prior to the printing process but the surface of the thermoplastic resin product may be treated with flame, corona discharge or anchor coating. The composition of the radiation-curable ink according to the present invention is adhered to the plastics material product in extremely close contact due to the adhesiveness as well as the stress-peeling preventive mechanism attributable to the low contractivity based on the fundamental structure of oligomer having pendent double bonds and/or polymer thereof. The close adhesion of the cured composition according to the present invention to the plastics material base, even without any pretreatment, provides a remarkable advantage in curtailing production steps in an overall printing process.

Further, the alkali-removable radiation-curable type ink composition according to the present invention contains the double bond-containing fluorinated carboxylic ester and/or fluorinated block copolymer and/or siloxane-containing block copolymer, and, upon printing, the fluorine and/or silicon rich parts are oriented on the surface, whereby the cured ink of the present invention affords chemical resistance, water-repellency, soiling resistance and abrasion resistance and enhances the stability of printed products during distribution as well as during their actual use.

Moreover, the alkali-removable radiation-cured ink includes a salt of an alkali metal and an acid group of double bond-containing polycarboxylic or carboxylic ester which facilitates formation of a water soluble salt or a salt capable of water-swelling after curing, and the cured ink film is removed in a filmy form without difficulty from the used printed product by means of treatment with an aqueous alkaline solution. Thereby, reusable plastic resins from the products can be recovered without contamination.

The filmy detachment of the cured ink film is caused by the penetration of an aqueous alkaline solution through the interface between the plastics material base and the ink film while preventing permeation of an aqueous alkaline solution from the surface due to the water-repellency created by the surface orientation of a double bond-containing fluorinated carboxylic ester and/or a fluorinated block copolymer and/or a siloxane-containing block copolymer. As such, the ink film so removed can be collected by a simple process such as filtration. There is no problem with water pollution since none of the film is discharged into waste water.

Furthermore, the scope of its application is further enlarged in view of the possibility. As the amount of double bond-containing fluorinated carboxylic ester and/or fluorinated block copolymer and/or siloxane-containing block copolymer is reduced, the ink film increases in hydrophilic properties. If the amount of component (B) among the said components (B) and (C) increases, the cured ink film as a whole dissolves in an aqueous alkaline solution and it can be removed from the surface of the plastics material.

The component (A) for the present vehicle mixture in the radiation-curable ink composition according to the present invention is at least one ingredient selected from the group consisting of a linear polyester oligomer substantially free of an acid group and a polymerisable double bond on the linear polyester chain, wherein 1 to 10 double bonds are pendent from the linear polyester chain; a linear polyester polymer substantially free from an acid group and a polymerisable double bond on the linear polyester chain, wherein 1 to 10 double bonds are pendent from the linear polyester chain; and mixtures thereof.

The linear polyester oligomer and/or polymer having 1 to 10 pendent double bonds in a molecule and having no polymerisable double bond in the main chain represent(s) an oligomer and/or polymer having 1 to 10 radiation polymerisable double bonds in a molecule. The said oligomer and/or polymer are (is) not only indicating the characteristics of being polymerised by the radiation with itself but also capable of polymerising in combination with other radiation-polymerisable double bond containing compounds.

The pendent double bonds in the said oligomer and/or polymer include those in a vinyl group, allyl group, methacryloyl or acryloyl group, crotonyl group, etc. But a methacryloyl or acryloyl group is preferable because of its better polymerisability when radiation is applied.

For the polyester oligomer and/or polymer having a methacryloyl or acryloyl group, polyurethane-methacrylate or acrylate is used in particular as it has an adhesive nature in contact with the base or a flexible chemical structure capable of following the expansion/contraction of the base. It is preferable to use polyurethane methacrylate or acrylate made from a high molecular polyol wherein the polyester polyol is extended with diisocyanates.

The copolymerised polyester polyols are synthesised mainly with dicarboxylic acid components and glycol components. The polyester has no polymerisable double bond in its skeleton and is called a "saturated polyester".

The dicarboxylic acid component may include as a main constituent an aromatic dicarboxylic acid such as terephthalic acid, isophthalic acid, orthophthalic acid, or the like and is used more than 60 mol% in total diacid compounds, and, for the purpose of affording flexibility, an aliphatic dicarboxylic acid such as succinic acid, adipic acid, sebacic acid, dodecane dicarboxylic acid etc. and an alicyclic dicarboxylic acid such as hexahydrophthalic acid and tetrahydrophthalic acid is also used less than 40 mol% in total diacid compounds.

The glycol component may include ethylene glycol, propylene glycol, 1,3-propanediol, 1,4-butanediol, 1,6-hexanediol, neopentyl glycol, diethylene glycol, dipropylene glycol, 1,4-cyclohexanedimethanol, spiro glycol, 1,4-phenylene glycol, an ethylene oxide or polyethylene oxide derivative of bisphenol A, polyethylene glycol, polypropylene glycol, and the like. Depending on necessity, a small amount of triols or tetraols such as trimethylol propane, glycerine, pentaerythritol and the like may be admixed.

In order to synthesise copolymerised polyester polyols from such dicarboxylic acid components and glycol components, an excess amount of the glycol component is used per dicarboxylic acid starting component. It is preferable to perform synthesis so that the terminal carboxylic group may be maintained at less than 50 eq/10⁶g in the resultant copolymerised polyester. In cases where it exceeds 50 eq/10⁶g, the target polyurethane methacrylate or acrylate product will not be obtained due to excessive increase of the inactive ends during reaction with diisocyanate compounds at the time of extending polyester polyols to urethane polymers.

In order to obtain the urethane acrylate from the copolymerised polyester polyol so synthesised, the said copolymerised polyester, a polyisocyanate compound and a compound having a methacryloyl or acryloyl group as well as an active hydrogen group may be reacted.

The polyisocyanate compound may include 2,4-trilene diisocyanate, diphenylmethane diisocyanate, 1,3-diisocyanate methylcyclohexane, 1,4-diisocyanate methylcyclohexane, 4,4'-diisocyanate dicyclohexane, 4,4'-diisocyanate dicyclohexylmethane, isophorone diisocyanate and a variety of other commercially available diisocyanates. In addition, when polyfunctional acrylates are required, polyisocyanate in a class more than tri-isocyanate may be applied alone or in combination with the said diisocyanate.

The chemical compound having a methacryloyl or acryloyl group and an active hydrogen group refers to a compound having at least one double bond and at least one hydroxyl group in one molecule. The double bond which can be used in the present invention may be vinylic, allylic, methacrylic, acrylic, crotonic, etc. The methacryloyl or acryloyl groups are preferred in view of their high sensitivity against radiation.

The chemical compounds having a methacryloyl or acryloyl group and an active hydrogen group may include dihydric alcohol monomethacrylates or monoacrylates, such as ethylene glycol monomethacrylate or monoacrylate, propylene glycol monomethacrylate or monoacrylate, butanediol monomethacrylate or monoacrylate, diethylene glycol monomethacrylate or monoacrylate, dipropylene glycol monomethacrylate or monoacrylate and the like; trihydric alcohol mono- or di-methacrylates or acrylates, such as trimethylol ethane monomethacrylate or monoacrylate, trimethylol ethane dimethacrylate or diacrylate, trimethylol propane monomethacrylate or monoacrylate, trimethylol propane dimethacrylate or diacrylate, glycerine monomethacrylate or monoacrylate, glycerine dimethacrylate or diacrylate and the like; polyhydric alcohol methacrylates or acrylates having a hydroxy group, including the methacrylate or acrylate of an alcohol containing 4 or more hydroxy groups, such as pentaerythritol monomethacrylate or monoacrylate, pentaerythritol dimethacrylate or diacrylate, pentaerythritol trimethacrylate or triacrylate and dipentaerythritol tetramethacrylate or tetra-acrylate; a chemical compound having a hydroxy group, derived from methacrylation or acrylation of caprolactone derivatives of any of the aforementioned alcohols; epoxymethacrylates or epoxyacrylates prepared by a ring-opening addition of methacrylic or acrylic acids with epoxy compounds, including monoglycidyl ethers; dihydric alcohol diglycidyl ethers such as ethylene glycol diglycidyl ether, polyethylene glycol diglycidyl ether, propylene glycol diglycidyl ether and neopentyl glycol diglycidyl ether; polyhydric alcohol glycidyl ethers such as trimethylol propane triglycidyl ether and the like; the glycidyl ether of a chemical compound having a phenolic hydroxy group, such as bisphenol A glycidyl ether and the like.

These compounds may be used singularly or in combination of 2 or more kinds. The double bond-pendent polyester oligomer and/or polymer which is obtained by reaction of the aforementioned starting compounds may be acceptable if it contains at least one double bond, and those having one to 10 double bonds are utilised for such application. For the purpose of avoiding any tack on cured film surface and maintaining adhesiveness and flexibility in contact with the base, it is preferable to keep at least 3 to 7 double bonds in a single molecule.

The component (B) for the present vehicle mixture in the radiation-curable ink composition according to the present invention is at least one ingredient selected from the group consisting of a one double bond-containing carboxylic acid wherein the carboxylic acid has at least one acid group, a carboxylic ester of the said acid, a carboxylic amide of the said acid, and mixtures thereof.

The group consisting of a one double bond-containing carboxylic acid wherein the carboxylic acid has at least one acid group, a carboxylic ester of the said carboxylic acid and a carboxylic amide of the said carboxylic acid, is regarded, in general, as an "acid monomer". A homopolymer of the acid monomer and a copolymer with higher contents of the acid monomer form water soluble alkali metal salts.

The double bond in the "acid monomer" may be vinylic, allylic, methacrylic, acrylic, crotonic, etc. The methacryloyl or acryloyl groups are preferable in this instance in view of their high radiation-curing ability. The acid group includes a carboxyl group, sulphonyl group, phosphoryl group and the like but an introduction of carboxyl groups into the molecule may usually serve the purpose. Each molecule requires at least 1 to 2 carboxyl groups.

While the simplest carboxyl group-containing acid monomer is methacrylic or acrylic acid, it is not desirable to be used as the starting materials for ink products owing to its strong odour and from the safety point of view. Therefore, the acid monomer is synthesised by reacting the compound having a double bond and a hydroxyl group in the same molecule, with a cyclic acid anhydride corresponding to its hydroxyl equivalent. The acid monomers are an alkylene oxide derivative of acid anhydride-carboxylated methacrylic or acrylic acids, a caprolactone derivative of acid anhydride-carboxylated methacrylic or acrylic acids, a monoglycidyl ether derivative of acid anhydride-carboxylated methacrylic or acrylic acids, an acid anhydride-carboxylated methylol methacrylic or acrylic amide, etc. The acid anhydride includes succinic anhydride, maleic anhydride, dodecylsuccinic anhydride, phthalic anhydride, tetrahydrophthalic anhydride, etc. Maleic anhydride is useful because of its lower polymerisability per se and even after ring-opening esterification and because of its lower polymerisation with methacrylates or acrylates.

The aforementioned acid monomer can be synthesised from a compound having one double bond and at least one hydroxyl group in one molecule by addition of a cyclic acid anhydride in an equimolar amount in view of the hydroxy group of the compound followed by heating for a determined period to introduce the carboxyl group. The anhydride to be used for the introduction of the carboxyl group includes saturated aliphatic dicarboxylic anhydrides such as succinic anhydride and the like, unsaturated aliphatic dicarboxylic anhydrides such as maleic anhydride, itaconic anhydride and the like, alicyclic dicarboxylic anhydrides such as tetrahydrophthalic anhydride, hexahydrophthalic anhydride and the like, aromatic dicarboxylic anhydrides such as phthalic anhydride, naphthenic anhydride and the like, tricarboxylic anhydrides such as trimellitic anhydride and the like.

Furthermore, acrylic acid dimers and acrylic acid trimers produced as by-products in the synthesis of an acrylic acid monomer can be used as acid monomers as they are.

The acid monomers wherein an acid group (other than a carboxyl group) is capable of forming a water-soluble homopolymer with an alkali metal salt are phosphoric acid mono- or di-esters such as monomethacryloxyethylphosphate, monoacryloxyethylphosphate, methacryloxyethylphosphorylphenyl, acryloxyethylphosphorylphenyl, dimethacryloxyethylphosphate, diacryloxyethylphosphate, and the like, sulphonic esters such as methacryloxyethylsulphonate, acryoxyethylsulphonate, dimethacryloxyethylsuccinylsulphonate, diacryloxyethylsuccinylsulphonate, and the like.

The above-mentioned acid monomer may be used singularly or in a mixture of 2 or more, depending on desired final physical properties of the cured film and the amount to be used may also be determined by similar considerations.

The component (C) for the present vehicle mixture in the radiation-curable ink composition according to the present invention is a double bond-containing polycarboxylic ester wherein 2 to 10 acid groups are present and at least 2 double bonds are pendent from the carboxylic ester having 2 to 10 acid groups.

The double bond-containing polycarboxylic ester having 2 to 10 acid groups and having at least 2 pendent double bonds in a molecule is regarded, in general, as an "acid oligomer". A homopolymer of the said acid oligomer and/or a copolymer with higher contents of the said acid oligomer have(has) a high cross-linking density and a capability of forming a water-swelling alkali metal salt. Its alkali metal salt also has the characteristics of swelling with water absorption.

As well as in the case of the above-mentioned acid monomer, a preferred double bond-containing group in this acid oligomer is a methacryloyl or acryloyl group in view of its higher radiation-curing ability. Also, the same concept is applicable to the oligomer's acid group which is capable of forming an alkali metal salt. Examples of such acid groups are carboxyl groups, sulphonyl groups and phosphoryl groups and the like but carboxyl is rather popular. While the number of the acid group actually used in the application for the present invention ranges from 1 to 10, the number has to be determined by the molecular weight of the acid oligomer but it is practical, in view of availability, to adopt 2 to 6 for the acid oligomer to be economically synthesised. The acid oligomer is so-called polyfunctional wherein the number of double bonds (number of functional groups) in a molecule is more than 2. The above-mentioned acid oligomer having 2 to 6 functional groups are used in many cases.

The acid oligomer is synthesised through the reaction of an epoxy-acrylate or methacrylate obtained by ring-opening esterification of a poly-epoxy compound and an acrylic acid or methacrylic acid as starting materials, with a cyclic acid anhydride to introduce a carboxyl group.

The epoxy-methacrylates or epoxy-acrylates includes aliphatic epoxy-methacrylates or epoxy-acrylates such as methacrylic or acrylic acid derivatives of neopentyl glycol diglycidyl ether, methacrylic or acrylic acid derivatives of 1,6-hexanediol diglycidyl ether, methacrylic or acrylic acid derivatives of trimethylol propane triglycidyl ether, and the like; aromatic epoxy-acrylates such as methacrylic or acrylic acid derivatives of bisphenol A glycidyl ether, methacrylic or acrylic acid derivatives of epoxyphenolnovolak, methacrylic or acrylic acid derivatives of phthalic acid glycidyl ether, and the like.

The cyclic acid anhydride to be used for the purpose of introducing a carboxyl group into the epoxy-acrylate, may include succinic anhydride, maleic anhydride, dodecynyl succinic anhydride, phthalic anhydride, trimellitic anhydride, tetrahydrophthalic anhydride, hexahydrophthalic anhydride and the like. The products thus created are pendented in a half-esterified form of hydroxyl groups in the epoxyacrylate by the acid anhydride.

The acid oligomer may be used singularly or in a mixture of more than 2 types. The amount of application of the acid oligomer is determined depending upon the performance required for the ultimate physical properties of cured film of this ink composition. Taking this point in terms of acid value, the mixing ratio and mixing amount must be determined so that the acid value of whole vehicle may be from 5 to 100, preferably in the range of 20 to 50.

The component (D) for the present vehicle mixture in the radiation-curable ink composition according to the present invention is at least one ingredient selected from the group consisting of (a) a double bond-containing fluorinated carboxylic ester, (b) a block copolymer comprising a fluorinated alkyl group-containing polymer segment and a methacrylic or acrylic polymer segment, (d) a block copolymer comprising a siloxane group-containing polymer segment and a methacrylic or acrylic polymer segment, and mixtures thereof.

The water-repellent double bond-containing fluorinated carboxylic esters wherein the fluorine component in the copolymer is oriented on the surface of the copolymer molecule include fluorinated alcoholic residue-containing esters such as trifluoroethyl methacrylate or acrylate, tetrafluoropropyl methacrylate or acrylate, octafluoropentyl methacrylate or acrylate, heptadecafluorodecyl methacrylate or acrylate and the like, as well as fluorinated macro-monomers wherein the base chain has a fluorine group and the side chain is pendented with an acryloyl group, such as the UNIRESIN™ series of products manufactured by Shin-Nakamura Kagaku Kogyo Co., Japan.

These double bond-containing fluorinated carboxylic esters form a film wherein the fluorine components in these double bond-containing fluorinated carboxylic esters are oriented on the surface thereof, to give the film water-repellency, chemical resistance and soiling resistance. Furthermore, the film has the effect of facilitating penetration of an aqueous alkaline solution along the interface between the cured ink film and the base since the polar groups are pushed toward the base.

The double bond-containing fluorinated carboxylic ester is combined in the range of 1 to 20 parts by weight per 100 parts of vehicle, and preferably 3 to 10 parts or so.

In cases where the amount of the double bond-containing fluorinated carboxylic ester is insufficient, the chemical resistance, repellency and soiling resistance of the ink surface is adversely affected, thus making it difficult to maintain the quality of the printed product at the distribution stage. In cases where it is excessive, the ink has a reduced recoating ability, which makes multi-colour printing difficult. Since such ink will be too water-repellent, it is detrimental to the infiltration of an aqueous alkaline solution for ink removal, thus lowering its work efficiency.

In the case of the block copolymer made of a fluorinated alkyl group-containing polymer segment and a methacrylic or acrylic polymer segment (fluorine-containing block copolymer), the methacrylic or acrylic copolymer segment is dissolved, by contrast, in the radiation-curable vehicle taking advantage of the high degree of surface orientation of the fluoro-containing group in the molecule and is eventually caught firmly within the hardened substance after curing. Therefore, the cured film will get durable water-repellency, chemical resistance, soiling resistance and abrasion resistance and, concurrently, the polar group in the vehicle is condensed at the side of the base, thus improving the effect on infiltration of an aqueous alkaline solution along the interface between the hardened film and the base.

On the methacrylic or acrylic polymer segment contained in the fluorinated block copolymer, various functional groups such as an amino group, alkylamino group, epoxy group, hydroxyl group, carboxyl group etc. can be introduced by selection of methacrylic or acrylic monomers. The fluorinated block copolymer carrying those functional groups can be optionally selected and utilised depending upon the physical properties required for the film product. When the acid group capable of forming an alkali metal salt, like a carboxyl group, is included, the application amount is limited in the range of acid values such as from 5 to 100. Otherwise it may affect the acid value of the vehicle.

These fluorinated block polymers are, for example, Modiper F™ series products manufactured by Nippon Yushi Co., Japan. The actual application amount of the fluorinated block polymer is 1 to 10 parts by weight per 100 parts by weight of the vehicle, but preferably about 3 to 7 parts. A predetermined amount of the fluorinated block polymer is dissolved beforehand in the component (F) which will ultimately constitute the vehicle composition, followed by addition to the vehicle.

The block copolymer consisting of a siloxane group-containing polymer segment and a methacrylic or acrylic polymer segment (siloxane-containing block copolymer) can be used since it provides good surface orientation. This siloxane-containing block copolymer is capable of affording not only water-repellency but also detachment ability from mould and abrasion resistance as it indicates better surface orientation similar to those of the fluorine-containing block copolymer. Although the water-repellency of the siloxane-containing block copolymer is not strong as that of the fluorine block copolymer, it has excellent abrasion resistance, and the cured ink film using it has a special feature that prevents any scratches during distribution processes of the printed products. Furthermore, it will be effective for the removal of the film with an aqueous alkaline solution as intended by the present invention.

In the case of the siloxane-containing block copolymer, various polar groups as well as mentioned above in the case of fluorinated block polymer can be introduced into a methacrylic or acrylic polymer segment by selecting a methacrylic or acrylic monomer. These may be optionally selected and used depending upon the physical film properties ultimately required.

The siloxane-containing block copolymers are, for example, Modiper-FS™ series products manufactured by Nippon Yushi Co., Japan. The application amount thereof is in the range of 0.05 to 10 parts by weight in 100 parts of the vehicle but preferably 1 to 5 parts by weight under normal circumstances. While it is somewhat inferior in water-repellency to the fluorine-containing block copolymer, an increase in the amount is not necessary to make it up; instead, it is desirable to avoid possible reduction in recoating ability when using larger amounts. A predetermined amount of this siloxane-containing block copolymer is dissolved beforehand in the component (F) which will ultimately constitute the vehicle composition followed by addition to the vehicle.

The fluorine-containing block copolymer and/or siloxane-containing block copolymer can be used in combination with the double bond-containing fluorinated carboxylic ester in a composition comprising either two or three of them. In such a case, a synergetic effect including the excellent water-repellency of the siloxane-containing compound and the excellent abrasion resistance of the siloxane-containing block copolymer can be obtained upon combining the two compounds but in the case of such a combination, the amount of the fluorine-containing compound shall be 2 to 4 times that of the siloxane-containing block copolymer so that the intended purpose may be satisfied to the best extent. In the case of such a combination, the overall application amount may be 1 to 10 parts by weight per 100 parts of vehicle, preferably in the range of 3 to 7 parts by weight.

The component (E) for the present vehicle mixture in the radiation-curable ink composition according to the present invention is a double bond-containing carboxylic ester, having at least 2 double bonds and free of an acid group, provided that this carboxylic ester is excluded from the above-mentioned component (A).

The double bond-containing polycarboxylic esters having no acid group which are excluded from the component (A) and sold commercially and are conventionally called a "polyfunctional monomer" or a "polyfunctional oligomer". Typical of those polyfunctional monomers are dihydric alcohol dimethacrylates or diacrylates such as ethylene glycol dimethacrylate or diacrylate, triethylene glycol dimethacrylate or diacrylate, tripropylene glycol dimethacrylate or diacrylate, 1,4-butanediol dimethacrylate or diacrylate, 1,6-hexanediol dimethacrylate or diacrylate, neopentyl glycol dimethacrylate or diacrylate, hydroxypivalic acid neopentyl glycol dimethacrylate or diacrylate, ethylene oxide-modified bisphenol A dimethacrylate or diacrylate, dicyclopentanyl dimethacrylate or diacrylate and the like, trihydric alcohol trimethacrylate or triacrylates, such as trimethylol ethane trimethacrylate or triacrylate, trimethylol propane trimethacrylate or triacrylate, glycerine trimethacrylate or triacrylate, *tris*[methacryloxyethyl or acryloxyethyl] isocyanurate and the like; polyhydric alcohol methacrylates or acrylates, such as pentaerythritol tetramethacrylate or tetra-acrylate, ditrimethylol propane tetramethacrylate or tetra-acrylate, dipentaerythritol hexamethacrylate or hexacrylate and the like. It can be allowed to contain partially unesterified hydroxy groups upon esterification of trihydric or polyhydric alcohols with methacrylic or acrylic acids. It can be also allowed to have hydroxy groups produced upon ring-opening esterification of epoxy groups with methacrylic or acrylic acids.

The polyfunctional oligomers are oligomers excluding the double bond-containing linear polyester oligomers and/or polymers defined as the component (A). Typical of those polyfunctional oligomers are epoxy methacrylate or acrylate, urethane methacrylate or acrylate, polyester methacrylate or acrylate, polyether methacrylate or acrylate, polybutadiene methacrylate or acrylate, and the like.

Among epoxy methacrylates or acrylates, most conventional examples are a bisphenol-type compound of the formula (1): 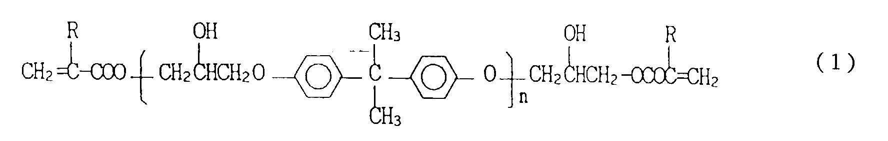 wherein n is 1 to 4 and R is H or CH₃, and those wherein the bisphenol skelton is substituted with bisphenol A, bisphenol F, bisphenol S or the like in the aforementioned formula (1). A phenolnovolak-type epoxy methacrylate having the formula (2): 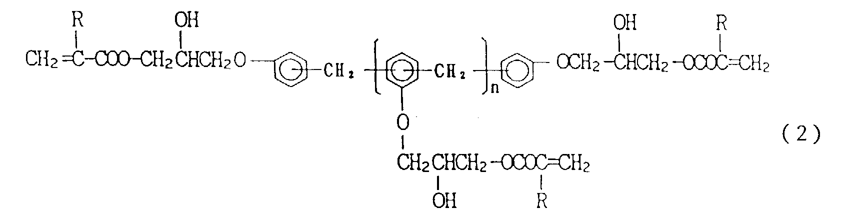 wherein n is 1 to 4 and R is H or CH₃, can be used.

The oligomers include aliphatic epoxy methacrylates or acrylates, such as epichlorohydrin-modified (poly)alkylene glycol dimethacrylates or diacrylates, and epoxylated soy bean oil methacrylates or acrylates, alicyclic epoxy methacrylates of acrylates such as a compound of the formula (3) : 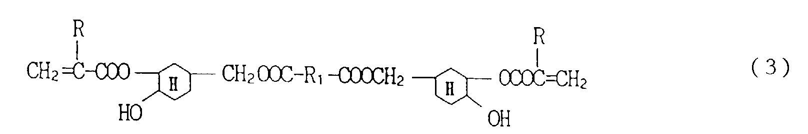 wherein R is H or CH₃ and R₁ is a residue derived from dicarboxylic compounds by exclusion of -COOH groups therefrom, depending on demand.

The urethane methacrylate or acrylate includes a compound having the formula (4): 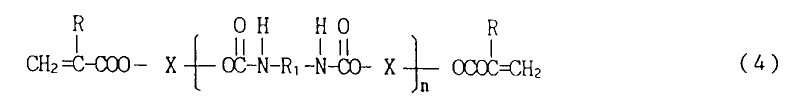 wherein n is 1 to 4, R is H or CH₃, R₂ is a residue derived from diisocyanates by exclusion of -NCO groups therefrom, and X is a residue derived from polyols by exclusion of OH groups therefrom, and the like.

In the formula (4), the isocyanates include aromatic diisocyanates such as trilene diisocyanate, 4,4-diphenylmethane diisocyanate, xylylene diisocyanate and the like, aliphatic diisocyanates such as hexamethylene diisocyanate, trimethylhexamethylene diisocyanate and the like, alicyclic diisocyanates such as isophorone diisocyanate, methylene bis(4-cyclohexylisocyanate) and the like and the polyols include glycols such as ethylene glycol, propylene glycol, 1,4-butanediol, 1,6-hexanediol, polyglycol ethers, bisphenol ethers such as ethoxylated bisphenol A and the like, spiro glycol, caprolactone-modified diols, carbonated diols and the like.

The urethane methacrylate or acrylate can be selected from those sold commercially and synthesised by methacrylating or acrylating the terminus of a urethane prepared by combination of the diisocyanate with the polyol.

The polyester methacrylate or acrylate is a compound of the formula (5): 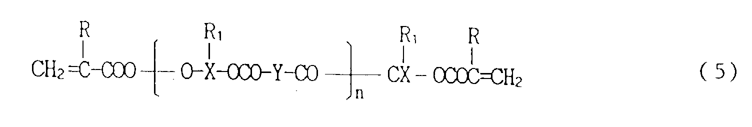 wherein n is 1 to 5, R is H or CH₃, R₁ is H or CH₂=C(R)COO-, X is a residue derived from polyols by exclusion of OH therefrom, Y is a residue derived from dicarboxylic compounds by exclusion of -COOH groups therefrom, etc. A number of such compounds are commercially available and can be selected from those known in the art, depending on requirements.

The polybutadiene methacrylates or acrylates include those synthesised by methacrylating or acrylating a liquid polybutadiene having at least two terminal hydroxyl groups, and those wherein the hydroxyl group is coupled with a methacrylic or acrylic ester having a hydroxyl group by using a diisocyanate. Typical of those are commercially available chemicals such as Quinbeam-101™ (Nippon Zeon, Japan), TE™ resins (Nippon Soda, Japan), and MIKERON NU-A™ (Hayakawa Rubber, Japan).

The purpose of using the polyfunctional monomer and/or oligomer is to create three-dimensional cross-linking when polymerisation is conducted with radiation and to affrord film hardness, gloss, water-tightness, chemical resistance and abrasion resistance.

The above-mentioned polyfunctional monomer and/or oligomer may be used independently but in many cases a mixture including two or more types is added as the vehicle component. The application volume is determined by consideration of whether the cross-linking density during the curing process is satisfactory in addition to the other considerations on physical properties thereof such as solubility, and viscosity as well as the other vehicle ingredients. Further, in accordance with the intended purpose, adjustment of acid values of the vehicle will also be one restriction condition on the determination of application volume in order to achieve the elimination with alkali (which is the subject of the present invention). In many cases, 5 to 20 parts by weight of the polyfunctional monomer and/or oligomer per 100 parts of the vehicle is used, but in case of excessive application, removable stress may occur due to cross-linking contraction during a curing process and the ability of adhering to the base may be hampered.

The component (F) for the present vehicle mixture in the radiation-curable ink composition according to the present invention is at least one ingredient selected from the group consisting of a one double bond-containing carboxylic ester free of an acid group; a one double bond-containing carboxylic amide free of an acid group; a one double bond-containing carboxylic imide free of an acid group; and mixtures thereof.

The double bond-containing carboxylic ester and/or amide and/or imide having a single radiation-curable double bond and free of an acid group in a single molecule is called a "monofunctional monomer" among monomers contained in the radiation-curable type resin compositions. The monofunctional monomer is used mainly as a diluent to adjust viscosity in the composition. A number of monofunctional monomers are known in the art. Typical of those monofunctional monomers are 2-ethylhexyl methacrylate or acrylate, cyclohexyl methacrylate or acrylate, dicyclopentanyl methacrylate or acrylate, benzyl methacrylate or acrylate, phenoxyethyl methacrylate or acrylate, tolyloxyethyl methacrylate or acrylate, ethoxyethyl methacrylate or acrylate, ethylcarbitol methacrylate or acrylate, isobornyl methacrylate or acrylate, methoxypropylene glycol methacrylate or acrylate, acryloylmorpholine, *N*-vinylpyrrolidone, *N*-vinylcaprolactam, *N,N*-diethylaminoethyl methacrylate or acrylate, *t*-butylaminoethyl methacrylate or acrylate, etc.

Furthermore, the adhesiveness of the monofunctional monomer is remarkably improved when it includes a polar group such as a hydroxyl group, epoxy group, phosphoric ester group and the like in its molecule, which may be utilised to the extent not to deteriorate water-tightness in the present invention.

Such monofunctional monomers include 2-hydroxyethyl methacrylate or acrylate, 2-hydroxypropyl methacrylate or acrylate, 3-butoxy-2-hydroxypropyl methacrylate or acrylate, caprolactone-modified 2-hydroxyethyl methacrylate or acrylate, 3-phenoxy-2-hydroxypropyl methacrylate or acrylate, glycidyl methacrylate or acrylate, ethylene oxide modified butoxylated phosphoric acid methacrylate or acrylate, etc.

These monofunctional monomers are applied alone or in admixture with two or more components. The amount of monomer can vary between 5 and 40 parts per 100 parts of the ink vehicle. The viscosity may be conventionally controlled between 10 and 30 parts of the monofunctional monomers.

The aforementioned ink vehicle components are mixed in the desirable ratio determined through experiments to produce ink vehicles. The composition ratio is determined by adjusting the acid value from about 5 to 100 in order to achieve the prime purpose of the present invention which is to remove the ink with an aqueous alkaline solution. In producing the ultra-violet-curable type ink using the vehicle so obtained, a photopolymerisation initiator, a photosensitiser, an organic and/or inorganic pigment and other additives can be added, but when applying EB (electron beam) curing, the photopolymerisation initiator and the photosensitiser are not necessary.

A number of photopolymerisation initiators which can be used in ultraviolet-initiated polymerisation are known in the art. Typical of those available initiators include benzophenone, diethoxyacetophenone, 1-hydroxycyclohexyl phenyl ketone, 2-methyl-(4-methylthiophenyl)-2-morpholinopropan-1-one, benzoylalkyl ether, benzil, benzildimethylketal, camphorquinone, 2-ethylanthraquinone, methyl benzoylbenzoate, 4-phenylbenzophenone, 3,3'-dimethyl-4-methoxybenzophenone, thioxanethone, 2,4-diethylthioxanthone, methyl phenylglyoxylate, benzoylphosphine oxide, 1-trimethylbenzoyldiphenylphosphine oxide, etc.

Typical of known photosensitisers are triethanolamine, methyldiethanolamine, triisopropanolamine, 4,4'-diethylaminobenzophenone, ethyl 4-dimethylaminobenzoate, *n*-butoxyethyl 4-diethylaminobenzoate, isoamyl 4-dimethylaminobenzoate, and the like.

The above-mentioned photopolymerisation initiator may be used alone but, in many cases, its photopolymerisability is improved when combined with the photosensitiser. The most suitable photopolymerisation initiator and photosensitiser can be selected depending upon the vehicle composition to be applied. The factors applicable to such a selection are curing speed, colouration during curing processes, existence of combined use of pigment, strength of odour after curing and the like, which are modified upon studies reflecting respective purposes. The application amount is possibly in the range of 1 to 20 parts by weight for the photopolymerisation initiator and photosensitiser respectively as against the ink vehicle as a whole but it is preferable not to use a large amount in view of the resultant effects that the molecular weight will not increase and the strength of the cured film will deteriorate and undesirable strong odour will be generated though curing progress will get increased. The most preferable application range is 2 to 10 parts by weight in combination use of both of them. In such case, the amount ratio between the photopolymerisation initiator and photosensitiser to be required varies depending upon the type and composition of the vehicle available. Also, in the case of ink containing an additional colouring pigment described below, the said ratio has to be changed reflecting the unique ultraviolet absorption ability of the pigment.

The pigment is roughly classified as an organic pigment or an inorganic pigment according to the chemical composition. It can be also classified as a coloured pigment or a colourless pigment (extender) in view of the application. With reference to the radiation-curing, the role of the end use classification is more important.

Among the coloured pigments, the inorganic pigments include white pigments such as white lead, zinc oxide, zinc sulphide, titanium dioxide and the like, blue pigments such as ultramarine blue, iron blue, cobalt blue and the like, green pigments such as chromium oxide, verdian, chrome green and the like, chrome yellow, titan yellow, iron oxide yellow, molybdate orange, cadmium pigments, yellow to red pigments such as red oxide, black pigments such as iron black, titan black, carbon black and the like, metal pigments such as aluminium powder and bronze powder, pearl pigments such as mica. However, there are many types of the inorganic pigment which can not be used for sanitary reasons. Thus, a harmless one is selected out of the above-mentioned pigments. The organic pigments include monoazo-pigments, diazo-pigments, condensed azo-pigments, indanthrone pigments, indigo pigments, thioindigo pigments, quinacridone pigments, phthalocyanine pigments, dioxazine pigments, isoindolinone pigments, pyrrolopyrrole pigments and the like. It is desirable to select the pigment with fast colour having strong light resistance in compliance with the radiation curing method.

The application amount of the above pigments varies depending on the intended colour depth but in most cases it falls in the range of 0.5 to 50 wt% per total ink composition volume. While the amount is restricted by colouring strength, being the pigment specificity, the amount ranges from 15 to 60 wt% in the case of titanium dioxide (representative white pigment), and from 3 to 6 wt% in the case of carbon black (black pigment). In the case of an organic pigment, 3 to 10 wt% is desirable in order to attain distinct colour and 4 to 6 wt% is desirable when curing is conducted with ultraviolet radiation. Generally speaking, the vehicle according to the present invention has better dispersing ability since it contains many polar groups, such as carboxyl groups. However, in order to achieve still better colouration, a large amount of pigment is combined with the vehicle which includes a small amount of pigment dispersing agent, thus creating a condition physically susceptible to crushing pressure by utilising improvement in the viscosity owing to its oil absorption, followed by sufficiently kneading with the conventional medium dispersing equipment in the colouring material production industry, such as a ball mill or roll mill. When the ink is composed by mixing, the resultant dispersed pigment (toner) in a high concentration is adjusted with the additional vehicle to meet the predetermined pigment density.

For the radiation-curable type ink component employed in the present invention, which is detachable with alkali, various colourless pigments (extenders) may be utilised for the purpose of maintaining the special properties of a printing ink such as viscosity, fluidity and thixotropy, of maintaining and increasing ink thickness, and of affording contraction buffer while curing, surface dull-finishing, and slipperiness, as well as of improving film strength. The popular extenders include inorganic types such as talc, kaolin, silica, precipitated barium sulphate, precipitated calcium carbonate, alumina white, white carbon and the like, and waxes such as polyethylene wax, polypropylene wax, polyfluorinated polyethylene wax and the like, and fine powders of artificial and/or natural polymers such as a polyamide resin, polyimide resin, melamine resin, or benzoguanamine resin, cellulose, collagen and the like. The amount of those pigments may be optionally determined in compliance with the respective purpose. A surfacer and/or defoamer may be included in the radiation-curable type ink composition according to the present invention which is detachable with alkali in order to adjust the finishing condition of the cured film. These agents shall be selected from the various types of surfacers and defoamers available in the market through experiments as to whether they are compatible to the vehicle composition and provide surface smoothness. Application types or amounts thereof never impose a restriction on the contents of the ink composition according to the present invention, and they may be determined from time to time but normally as a total amount of the surfacer and/or defoamer, they are used in an amount of from 0.5 to 5 wt% per overall volume of ink.

In addition, an ultraviolet absorbing agent, a wetting agent, an anti-oxidizing agent and the like may be employed as the case may be.

The ink using the radiation-curable type ink composition according to the present invention which is detachable with alkali after curing is used mainly for a screen printing method but it may be useful in other applications such as other printing methods such as flexography and gravure printing when it is adjusted to have less viscosity with the help of an organic solvent or a mixture thereof.

The cured prints with the radiation-curable type ink having a removable nature by alkaline water on polyethylene terephthalate resins can be easily removed by dipping the prints in an strong aqueous alkaline solution such as sodium hydroxide and potassium hydroxide for a short time and no drastic treatment such as hydrolysis on polyethylene terephthalate is required. For removal, there are several steps ranging from dissolving detachment to filmy detachment, which make it possible to attain the intended performance by controlling the amount ratio of (B), (C) and (D). In any case, selection of detachment conditions is determined considering the method of waste treatment after removal. After detachment the polyethylene terephthalate resin can be recovered in a condition clean enough for regeneration and re-use through a simple method such as washing with water and drying.

While the condition for detaching the ink composition by alkali varies depending the ratio of weight of (B), (C) and (D), it is preferable to have an alkaline concentration of 5% or more, the temperature at 70°C or more and a duration for 5 minutes or more. However, it may be practical to use an alkaline concentration of 1% and a temperature of 50°C by applying an extended time of immersion in an alkaline solution or immersion while brushing the printed surface, or by controlling the ratio of (B), (C) and (D), or by reflecting additional conditions brought by the printing and curing processes and the like.

When the alkali removing treatment is adopted on a commercial scale, it may be performed by the selective application of those conditions.

The method for printing letters, designs, figures and the like with the above-mentioned printing ink includes a silk-screen printing method. In this method, in general, a silk-screen with the range of 254 to 330 mesh is normally utilised. A roughened surface on the plastic product may be preferably printed with the printing ink.

Further, the ultraviolet radiation used on the printing surface with the printing ink containing the said radiation-curable resin vehicle is conducted normally using a high pressure mercury-vapour lamp or metal halide lamp and the like, wherein its wavelength is 200 to 450 nm or so. The integrated ultraviolet exposure is preferably in the range of 100 to 500 mj/cm². Also, in the case of electron radiation, the radiation amount is normally in the range of 10 to 100 KGy, preferably in the range of 30 to 60 KGy.

The method for printing the plastics material product is first to carry out printing with the ink of the radiation-curable type composition according to the present invention, and then to harden the radiation-curable ingredients in the printing ink by applying radiation to the printed surface.

For the thermoplastic resin product, various resin products such as polyester resin products and polyolefin resin products can be utilised but, among all, the polyethylene terephthalate product is particularly preferable. The polyethylene terephthalate which can be used in the present invention stands for polyester having ethylene terephthalate repeating units, which comprises basically terephthalic acid as the acid content and ethylene glycol as the glycol content, but may contain at least one acid component and at least one glycol component for copolymers. The acid component may include isophthalic acid, diphenyl ether-4,4'-dicarboxylic acid, naphthalene-1,4- or -2,6-dicarboxylic acid, adipic acid, sebacic acid, decane-1,4-dicarboxylic acid, hexahydroterephthalic acid, and the like. The glycol component may include propylene glycol, 1,4-butanediol, neopentyl glycol, diethylene glycol, polyethylene glycol, polypropylene glycol, polytetramethylene glycol, cyclohexanedimethanol, 2,2-bis(4-hydroxyphenyl)propane, 2,2-bis(4-hydroxyethoxyphenyl)propane, *p*-hydroxybenzoic acid, and the like. These acid and glycol components may be each mixed within the range of less than 50 wt% for each content in the copolymer content as a whole.

The polyethylene terephthalate may contain additives such as a colouring agent, an ultraviolet-absorbing agent and an anti-static agent in an appropriate proportion as the case may be.

The polyethylene terephthalate product includes containers made of, as starting materials, saturated polyesters such as polyethylene terephthalate by moulding.

The containers to be used in the method for printing on the surface of a container body include polyester containers obtained by processes such as hollow moulding, blow moulding with double axle extension or injection moulding and the like.

The following working examples and preparation examples illustrate the present invention in further detail.

### Preparation Example 1

A double bond-pendent linear polyester oligomer and/or polymer which can be used in the following Working Examples is prepared by urethane-acrylating the copolymerised polyester polyols of the following composition (1) with the following composition (2):

| (1) Copolymerised polyester polyol | | |
|---|---|---|
| | A | B |
| (Dicarboxylic acid components) | | |
| Terephthalic acid | 30 | 50 |
| Isophthalic acid | 30 | 50 |
| Orthophthalic acid | 40 | - |
| (Glycol components) | | |
| Ethylene glycol | 55 | 50 |
| Neopentyl glycol | 45 | 50 |
| Molecular weight of copolymer | 1900 | 3000 |
| | (part by weight) | |

| (2) A double bond-containing oligomer and/or polymer | | |
|---|---|---|
| | A-1 | B-1 |
| (Copolymerised polyester polyol components) | | |
| A | 100 | |
| B | | 100 |
| (Polyisocyanate components) | | |
| Isophorone diisocyanate | 28 | 27 |
| (Hydroxyl group-containing methacrylic or acrylic esters) | | |
| Pentaerythritol triacrylate | | 40 |
| 2-Hydroxyethyl acrylate | 13 | |
| Molecular weight | 2500 | 3600 |
| | (part by weight) | |

### Preparation Example 2

A double bond and carboxyl group-containing carboxylic ester is prepared as follows:
(a) Bisphenol A glycidyl ether (190.0 g, 190.0 epoxy equivalents), acrylic acid (75.0 g, 1.05 mol), dimethylbenzylamine (2 g) and p-methoxyphenol (0.2 g) were placed in a flask equipped with a thermometer, a stirrer and a reflux condenser, dissolved homogeneously, then heated to 80°C and allowed to stand for 24 hours to afford an epoxy acrylate with 10.3 acid value. Then, the product was reacted with phthalic anhydride (140.6 g, 0.95 mol) and the mixture allowed to stand at 80°C for 5 hours to produce a bisphenol A epoxy acrylate-phthalic ester (viscous pale yellow product, 130.7 acid value).
(b) Epoxy novolak resins (190.0 g, 190.0 epoxy equivalents), acrylic-acid (75.0 g, 1.05 mol), tetramethylammonium chloride (2.0 g) and p-methoxyphenol (0.2 g) were placed in a container similar to (a) above, dissolved homogeneously, then heated to 80°C and allowed to stand for 24 hours to afford an epoxy acrylate with 10.5 acid value. Then, the product was reacted with succinic anhydride (95 g, 0.95 mol) and the mixture allowed to stand at 80°C for 5 hours to produce an epoxy novolak acrylate-succinic ester (viscous pale yellow product, 145.2 acid value).
(c) Glycerine triglycidyl ether (150.0 g, 150.0 epoxy equivalents), acrylic acid (75.0 g, 1.05 mol), tetrabutylphosphonium bromide (2.0 g) and p-methoxyphenol (0.2 g) were placed in a container similar to (a) above, dissolved homogeneously, then heated to 80°C to afford an epoxy acrylate with 9.5 acid value. Then, the product was reacted with hexahydrophthalic anhydride (145 g, 0.95 mol) and the mixture allowed to stand at 80°C for 5 hours to produce a glycerine epoxy acrylate-hexahydrophthalic ester (viscous pale yellow product, 141.3 acid value).

### Working Example 1

The double bond-containing oligomer obtained in Preparation Example 1, B-1 (24.4 g), an aliphatic urethane hexaacrylate (7.8 g), a fluorine-containing macro-monomer (25.7 g), monoacryloyloxyethyl phthalate (6.3 g), the bisphenol A epoxy acrylate-phthalic ester obtained in Preparation Example 2, (a) (3.2 g), trimethylol propane triacrylate (2.0 g), phenoxyethyl acrylate (14.2 g), and acryloylmorpholine (16.4 g) were mixed to give a vehicle mixture with 17.6 acid value.

One hundred parts of the vehicle were admixed with 15 parts of mistrone vapour talc, 10 parts of benzildimethyl ketal, 5 parts of dimethylaminobenzoic acid ethyl ester, 3 parts of polyethylene wax powders and 1 part of a surfacer, BYK-306™ (Byk-Mallinckrodt Chemische Produkte GmbH) and 0.1 part of a thermal polymerisation inhibitor, phenothiazine and the mixture was treated by a roll mill to produce a colourless ink with dispersion particle sizes of less than 5 microns.

An untreated polyethylene terephthalate sheet was screen printed with the ink thus obtained by means of a 300 mesh Tetron™ screen and the printed product was radiated with a 120 W/cm metal halide lamp to the extent of integrated ultraviolet exposure of 200 mj/cm² to obtain a cured film. The film so prepared did not show any sign of exfoliation at a peel-off test with a cellulose adhesive tape but it showed close adhesion to the base.

When the cured film prepared under the same condition was kept in a 2% aqueous solution of sodium hydroxide at 70°C for 20 minutes, the cured film detached in a filmy form and no trace of prints were observed on the polyethylene terephthalate base.

### Working Example 2

The double bond-containing oligomer obtained in Preparation Example 1, B-1 (177 g) was dissolved in 118 g of phenoxyethyl acrylate, and the resultant solution was mixed with a pigment disperser (1.5 g, SOLSPERSE™ 24000/SOLSPERSE™ 5000=4/1, manufactured by ICI, Great Britain), followed by addition of HELIOGEN BLUE-L-7080™ (manufactured by BASF) . The mixture was kneaded extensively with a roll mill to produce toners with dispersion particle sizes of less than 5 microns.

The toners thus obtained (41.6 g) were well mixed with dipentaerythritol hexaacrylate (8.4 g), trimethylol propane triacrylate (4.6 g), trimethylol propane triepoxy-acrylate (4.6 g) , monoacryloyloxyethyl phthalate (8.7 g), the glycerine epoxy acrylatehexahydrophthalic ester obtained in Preparation Example 2, (c) (2.2 g), octafluoropentyl acrylate (8.8 g), and acryloylmorpholine (21.0 g) to give coloured ink vehicles (with 21.5 acid value).

One hundred parts of the coloured ink vehicle were admixed with 3.0 g of a photopolymerisation initiator, diethylthioxanthone, 3.0 g of a photosensitiser, isoamyl 4-dimethylaminobenzoate, 35 g of precipitated barium sulphate, 3 g of fluorinated polyethylene wax, 2 g of a surfacer (VERSA-FLOW BASE™ manufactured by Shamrock Chemicals Corp.), 0.04 g of a thermal polymerisation inhibitor, *p*-methoxyphenol and well mixed by stirring followed by kneading by a roll mill to give a homogenous blue ink.

An untreated polyethylene terephthalate sheet was screen printed with the ink thus obtained in the same manner as described in Working Example 1 and the printed product was radiated with a 120 W/cm metal halide lamp to the extent of integrated ultraviolet exposure of 300 mj/cm² to obtain a cured film. The film so prepared did not show any sign of exfoliation at a peel-off test with a cellulose adhesive tape but it showed close adhesion to the base.

When the cured film prepared under the same condition was kept in a 2% aqueous solution of sodium hydroxide at 70°C for 20 minutes, the cured film detached in a filmy form and no trace of prints was observed on the polyethylene terephthalate base.

### Working Example 3

The double bond-containing oligomer obtained in Preparation Example 1, B-1 (14.2 g), an aliphatic urethane hexaacrylate (4.9 g), a fluorine-containing macro-monomer (5.9 g), monoacryloyloxyethyl succinate (4.5 g), the epoxy novolak acrylate-succinic ester obtained in Preparation Example 2, (b) (2.5 g), trimethylol propane triepoxy-acrylate (3.9 g), tolyloxyethyl acrylate (3.9 g), phenoxyethyl acrylate (9.4 g), and acryloylmorpholine (9.8 g) were mixed to give an ink vehicle mixture with 25.8 acid value.

A pigment dispersing agent, Disperbyk-110™ (0.5 g, manufactured by Byk-Mallinckrodt Chemische Produkte GmbH) was added to the ink vehicle mixture and the resultant mixture was mixed homogeneously by stirring. Then, 30.0 g of titanium oxide, TIPAQUE CR-580™ (Ishihara Sangyo Kaisha Ltd., Japan), 6.0 g of a photopolymerisation initiator acylphosphine oxide, 2.0 g of fluorinated polyolefin wax, 1.5 g of a surfacer, VERSA-FLOW BASE™ (manufactured by Shamrock Chemicals Corp.), 1.0 g of a defoamer, AQUALEN N™ (manufactured by Kyoeisha Chemical Co., Japan), and 0.04 g of a thermal polymerisation inhibitor, *p*-methoxyphenol were added to the mixture followed by stirring for a while and the product was kneaded by a roll mill to give an ink with dispersion particle sizes of less than 5 microns.

An untreated polyethylene terephthalate sheet was screen printed with the ink thus obtained in the same manner as described in Working Example 1 and the printed product was radiated with a 120 W/cm metal halide lamp to the extent of integrated ultraviolet exposure of 300 mj/cm² to obtain a cured film. The film so prepared did not show any sign of exfoliation at a peel-off test with a cellulose adhesive tape but it showed close adhesion to the base.

When the cured film prepared under the same condition was kept in a 2% aqueous solution of sodium hydroxide at 70°C for 30 minutes, the cured film detached in a filmy form and floated in the solution. No trace of prints was observed on the polyethylene terephthalate base.

### Working Example 4

The double bond-containing oligomer obtained in Preparation Example 1, B-1 (19.6 g), phenoxyethyl acrylate (19.7 g) , tolyloxyethyl acrylate (6.6 g), acryloylmorpholine (16.1 g), trimethylol propane triepoxyacrylate (6.6 g), 6 functional group-containing urethane EBECRYL™ (8.2 g, manufactured by DAICEL. UCB Co., Ltd), monoacryloyloxyethyl phthalate (7.2 g), the bisphenol A epoxy acrylate-phthalic ester obtained in Preparation Example 2, (a) (2.0 g), and the block copolymer solution (14.0 g) which is prepared by mixing and dissolving acryloylmorpholine (71.0 wt%), a fluorine-containing block copolymer, Modiper F600™ (20.5 wt%, Nippon Yushi Co., Japan) and a siloxane-containing block copolymer, Modiper FS700™ (8.5 wt%, Nippon Yushi Co., Japan), were mixed by stirring to give homogeneous vehicles with 17.9 acid value.

Then, a pigment disperser, Anti-Terra-U™ (0.2 g, manufactured by Byk-Mallinckrodt Chemische Produkte GmbH) and *p*-methoxyphenol (0.05 g) were dissolved in the vehicle (92.0 g) in advance, followed by dispersing Raven 450™ (1.5 g, manufactured by Columbian Chemicals Co.), Raven 1350™ (1.5 g, manufactured by Columbian Chemicals Co.) and Titan Black 10S™ (5.0 g, manufactured by Mitsubishi Material Co., Japan) and kneading by a roll mill extensively to afford colouring vehicles with dispersion particle sizes of less than 5 microns.

To 96.5 g of the colouring vehicle were added 2.0 g of a fluorinated polyolefin wax, 0.5 g of a surfacer, BYK-306™ (manufactured by Byk-Mallinckrodt Chemische Produkte GmbH) and 1.0 g of a defoamer, AQUALEN N™ (manufactured by Kyoeisha Chemicals Co., Japan), and the resultant mixture was stirred extensively by a dissolver to produce a black ink for EB curing.

An untreated polyethylene terephthalate sheet was screen printed with the black ink thus obtained by means of a 330 mesh screen and the printed ink was cured in 6 Mrad (165 KV, 3.2 mA, 10 m/min.) with an EB radiation device, CB250/15/180L™ (manufactured by Iwasaki Denki Co., Japan) to form a tack-free cured coating film. The film so prepared did not show any sign of exfoliation at a peel-off test with a cellulose adhesive tape but it showed close adhesion to the base.

When the cured film was dipped in a 5% aqueous solution of sodium hydroxide at 80°C for 5 minutes, the cured film detached in filmy form completely from the base. Neither trace of prints nor any sign of erosion by an aqueous alkaline solution was observed on the polyethylene terephthalate base.

## Claims

1. A radiation-curable ink composition which comprises a vehicle mixture comprising:
(A) at least one ingredient selected from the group consisting of a linear polyester oligomer substantially free of an acid group and free of a polymerisable double bond on the linear polyester chain, wherein 1 to 10 double bonds are pendent from the linear polyester chain; a linear polyester polymer substantially free of an acid group and free of a polymerisable double bond on the linear polyester chain, wherein 1 to 10 double bonds are pendent from the linear polyester chain; and mixtures thereof,
(B) at least one ingredient selected from the group consisting of a one double bond-containing carboxylic acid wherein the acid has at least one acid group, a carboxylic ester of the said acid, a carboxylic amide of the said acid, and mixtures thereof,
(C) a double bond-containing polycarboxylic ester, wherein 2 to 10 acid groups are present and at least 2 double bonds are pendent from the carboxylic ester having 2 to 10 acid groups,
(D) at least one ingredient selected from the group consisting of a double bond-containing fluorinated carboxylic ester, a block copolymer comprising a fluorinated alkyl group-containing polymer segment and a methacrylic or acrylic polymer segment, a block copolymer comprising a siloxane group-containing polymer segment and a methacrylic or acrylic polymer segment, and mixtures thereof,
(E) a double bond-containing carboxylic ester, having at least 2 double bonds and free of an acid group, provided that it is excluded from the above-mentioned component (A), and
(F) at least one ingredient selected from the group consisting of a one double bond-containing carboxylic ester free of an acid group, a one double bond-containing carboxylic amide free of an acid group, a one double bond-containing carboxylic imide free of an acid group, and mixtures thereof,
wherein the acid value of the vehicle mixture is from 5 to 100.

2. A radiation-curable ink composition according to claim 1, characterised in that the ink composition further comprises 0 to 20 parts by weight of a photopolymerisation initiator, 0 to 20 parts by weight of a photosensitiser, and 0 to 50 wt% of an organic and/or inorganic pigment per total ink composition.

3. A radiation-curable ink composition according to claim 1, characterised in that the component (A) is selected from oligomers or polymers which contain at least one vinyl, allyl, methacryloyl, acryloyl, or crotonyl group.

4. A radiation-curable ink composition according to claim 1, characterised in that the component (A) is at least one oligomer or polymer classified in urethane methacrylates or acrylates derived from a saturated polyester polyol compound, a polyisocyanate compound and a compound having a methacryloyl or acryloyl group and an active hydrogen group as starting compounds.

5. A radiation-curable ink composition according to claim 4, characterised in that the saturated polyester polyol compound is synthesised from a dicarboxylic acid component and a glycol component wherein the dicarboxylic acid component is at least one compound selected from the group consisting of an aromatic dicarboxylic acid, an aliphatic dicarboxylic acid, an alicyclic dicarboxylic acid and a heterocyclic dicarboxylic acid and the glycol component is selected from the group consisting of an alkylene glycol, a dialkylene glycol, cyclohexanedimethanol, spiro glycol, 1,4-phenylene glycol, bisphenol A ethylene oxide or polyethylene oxide, and polyethylene glycol.

6. A radiation-curable ink composition according to claim 4, characterised in that the polyisocyanate compound is at least one compound selected from the group consisting of 2,4-trilene diisocyanate, diphenylmethane diisocyanate, 1,3-diisocyanate methylcyclohexane, 1,4-diisocyanate methylcyclohexane, 4,4'-diisocycanate dicyclohexane, 4,4'-diisocyanate dicyclohexylmethane, and isophorone diisocyanate.

7. A radiation-curable ink composition according to claim 4, characterised in that the compound having a methacryloyl or acryloyl group and an active hydrogen group is at least one compound selected from the group consisting of a dihydric alcohol monomethacrylate or monoacrylate, trihydric alcohol mono- or dimethacrylate or mono- or diacrylate, polyhydric alcohol methacrylate or acrylate having at least one hydroxy group, an at least one hydroxy group-containing methacrylate or acrylate of an alcohol containing 4 or more hydroxy groups, a hydroxy group-containing compound derived from methacrylation or acrylation of a caprolactone derivative of any of the aforementioned alcohol compounds, and epoxy methacrylates or acrylates derived from a ring-opening addition of a methacrylic or acrylic acid with a glycidyl ether derivative of dihydric or polyhydric alcohols or phenolic hydroxy group-containing compounds.

8. A radiation-curable ink composition according to claim 1, characterised in that the component (B) is at least one monomer selected from the group consisting of monomers which contains one vinyl group, allyl group, methacryloyl or acryloyl group, or crotonyl group, and one carboxyl group, sulphonyl group, or phosphoryl group.

9. A radiation-curable ink composition according to claim 1, characterised in that the component (B) is synthesised by reacting a compound having a double bond and a hydroxyl group in the same molecule, with a cyclic acid anhydride corresponding to its hydroxyl equivalent.

10. A radiation-curable ink composition according to claim 1, characterised in that the component (B) is at least one compound selected from the group consisting of an alkylene oxide derivative of acid anhydride-carboxylated methacrylic or acrylic acid, a caprolactone derivative of acid anhydride-carboxylated methacrylic or acrylic acid, a monoglycidyl ether derivative of acid anhydride-carboxylated methacrylic or acrylic acid, an acid anhydride-carboxylated methylol methacrylic or acrylic amide, methacryloxyethylphosphate or acryloxyethylphosphate, methacryloxyethylphosphorylphenyl or acryloxyethyl-phosphorylphenyl, dimethacryloxyethylphosphate or diacryloxyethylphosphate, methacryloxyethylsulphonate or acryloxyethylsulphonate, and dimethacryloxyethyl-succinylsulphonate or diacryloxyethylsuccinylsulphonate.

11. A radiation-curable ink composition according to claim 10, characterised in that the acid anhydride component is at least one compound selected from the group consisting of saturated or unsaturated aliphatic dicarboxylic anhydrides, alicyclic dicarboxylic anhydrides, aromatic dicarboxylic hydrides and tricarboxylic anhydrides.

12. A radiation-curable ink composition according to claim 10, characterised in that the acid anhydride component is succinic anhydride, maleic anhydride, dodecylsuccinic anhydride, phthalic anhydride, tetrahydrophthalic anhydride or a mixture of at least two in these anhydrides.

13. A radiation-curable ink composition according to claim 1, characterised in that the component (C) is at least one polycarboxylic ester, wherein 2 to 10 acid groups are present and at least 2 double bonds are pendent from the carboxylic ester selected from the group consisting of polycarboxylic esters which contain at least two vinyl groups, allyl groups, methacryloyl or acryloyl groups or crotonyl groups, and 2 to 10 carboxyl groups, sulphonyl groups, or phosphoryl groups.

14. A radiation-curable ink composition according to claim 1, characterised in that the component (C) is synthesised by reacting an epoxy-acrylate or methacrylate with a cyclic acid anhydride, wherein the epoxy-acrylate or methacrylate is obtained by ring-opening esterification of a poly-epoxy compound and a methacrylic acid or acrylic acid.

15. A radiation-curable ink composition according to claim 14, characterised in that the epoxy-acrylate or methacrylate is at least one compound selected from the group consisting of a methacrylic or acrylic acid derivative of neopentyl glycol diglycidyl ether, a methacrylic or acrylic acid derivative of 1,6-hexanediol diglycidyl ether, a methacrylic or acrylic acid derivative of trimethylol propane triglycidyl ether, a methacrylic or acrylic acid derivative of bisphenol A glycidyl ether, a methacrylic or acrylic acid derivative of epoxyphenolnovolak, and a methacrylic or acrylic acid derivative of phthalic acid diglycidyl ester.

16. A radiation-curable ink composition according to claim 14, characterised in that the acid anhydride component is succinic anhydride, maleic anhydride, dodecylsuccinic anhydride, phthalic anhydride, trimellitic anhydride, tetrahydrophthalic anhydride or a mixture of at least two of these anhydrides.

17. A radiation-curable ink composition according to claim 1 wherein the double bond-containing fluorinated carboxylic ester for the component (D) is a fluorinated alcoholic residue-containing ester or a fluorinated macro-monomer wherein the main chain has a fluorinated group and the side chain is a pendent acryloyl or methacryloyl group.

18. A radiation-curable ink composition according to claim 1, characterised in that the carboxylic ester for the ingredient (D) is at least one methacrylate or acrylate ester selected from the group consisting of trifluoroethyl methacrylate or acrylate, tetrafluoropropyl methacrylate or acrylate, octafluoropentyl methacrylate or acrylate, and heptadecafluorodecyl methacrylate or acrylate.

19. A radiation-curable ink composition according to claim 1, characterised in that the carboxylic ester for the ingredient (D) is combined in the range of 1 to 20 parts by weight per 100 parts of the vehicle mixture.

20. A radiation-curable ink composition according to claim 1, characterised in that the block copolymer comprising a fluorinated alkyl group-containing polymer segment and a methacrylic or acrylic polymer segment is combined in the range of 1 to 10 parts by weight per 100 parts of the vehicle mixture.

21. A radiation-curable ink composition according to claim 1, characterised in that the block copolymer comprising a siloxane group-containing polymer segment and a methacrylic or acrylic polymer segment is combined in the range of 0.5 to 10 parts by weight per 100 parts of the vehicle mixture.

22. A radiation-curable ink composition according to claim 1, characterised in that the ingredient (D) is the mixture of two or three members selected from the group consisting of
(1) a double bond-containing fluorinated carboxylic ester,
(2) a block copolymer which comprises a fluorinated alkyl group-containing polymer segment and a acrylic polymer segment, and
(3) a block copolymer which comprises a siloxane group-containing polymer segment and a methacrylic or acrylic polymer segment.

23. A radiation-curable ink composition according to claim 22, characterised in that the total amount of said three components is in the range of 1 to 10 parts by weight per 100 parts of the vehicle mixture.

24. A radiation-curable ink composition according to claim 1, characterised in that the component (E) is at least one compound selected from the group consisting of dihydric alcohol dimethacrylates or diacrylates, trihydric alcohol trimethacrylates or triacrylates, polyhydric alcohol methacrylates or acrylates, epoxy methacrylates or acrylates, urethane methacrylates or acrylates, polyester methacrylates or acrylates, polyether methacrylates or acrylates, polybutadiene polyol urethane methacrylates or acrylates and polybutadiene polyol methacrylates or acrylates.

25. A radiation-curable ink composition according to claim 1, characterised in that the component (F) is selected from the group consisting of 2-ethylhexyl methacrylate or acrylate, cyclohexyl methacrylate or acrylate, dicyclopentanyl methacrylate or acrylate, benzyl methacrylate or acrylate, phenoxyethyl methacrylate or acrylate, tolyloxyethyl methacrylate or acrylate, ethoxyethyl methacrylate or acrylate, ethylcarbitol methacrylate or acrylate, isobornyl methacrylate or acrylate, methoxypropylene glycol methacrylate or acrylate, metacryloylmorpoline, acryloylmorpholine, *N*-vinylpyrrolidone, *N*-vinylcaprolactam, *N,N*-diethylaminoethyl methacrylate or acrylate, *t*-butylaminoethyl methacrylate or acrylate, 2-hydroxyethyl methacrylate or acrylate, 2-hydroxypropyl methacrylate or acrylate, 3-butoxy-2-hydroxypropyl methacrylate or acrylate, caprolactone-modified 2-hydroxyethyl methacrylate or acrylate, 3-phenoxy-2-hydroxypropyl methacrylate or acrylate, glycidyl methacrylate or acrylate, and ethylene oxide-modified butoxylated phosphoric acid methacrylate or acrylate.

## Patentansprüche

1. Eine mittels Strahlung härtbare Karbezusautmensetzung, die ein Trägerstoffgemisch aufweist, das enthält:
(A) mindestens einen aus der Gruppe gewählten Bestandteil, die sich zusammensetzt aus einem linearen Polyesteroligomer, das im wesentlichen keine Säuregruppe und keine polymerisierbare Doppelbindung an der linearen Polyesterkette aufweist, wobei 1 bis 10 Doppelbindungen an die lineare Polyesterkette gekoppelt sind; einem linearen Polyesterpolymer, das im wesentlichen keine Säuregruppe und keine polymerisierbare Doppelbindung an der linearen Polyesterkette aufweist, wobei 1 bis 10 Doppelbindung an die lineare Polyesterkette gekoppelt sind; sowie Mischungen daraus,
(B) mindestens einen aus der Gruppe gewählten Bestandteil, die sich zusammensetzt aus einer eine Doppelbindung aufweisenden Carbonsäure, wobei die Säure mindestens eine Säuregruppe enthält, einem Carbonsäureester der genannten Säure, einem Carbonsäureamid der genanten Säure sowie aus Mischungen daraus,
(C) einen Doppelbindungen aufweisenden Polycarbonsäureester, bei dem 2 bis 10 Säuregruppen vorhanden sind und mindestens 2 Doppelbindungen an den Carbonsäureester gekoppelt sind, der 2 bis 10 Säuregruppen aufweist,
(D) mindestens einen aus den Gruppe gewählten Bestandteil, die sich zusammensetzt aus einem Doppelbindungen enthaltenden, fluorierten Carbonsäureester, einem Blockcopolymer, welches ein fluorierte Alkylgruppen enthaltendes Polymersegment und ein Methacryl- oder AcrylSiloxangruppen enthaltendes Polymersegment und ein Mischungen daraus,
(E) einen Doppelbindungen aufweisenden Carbonsäureester, der mindestens 2 Doppelbindungen aufweist und keine Säuregruppe enthält, vorausgesetzt, daß dieser aus der oben angegeben Komponente (A) ausgeschlossen ist, und
(F) mindestens einen aus der Gruppe ausgewählten Bestandteil, die sich zusammensetzt aus einem eine Doppelbindung aufweisenden und keine Säuregruppe enthaltenden Carbonsäureester, einem eine Doppelbindung aufweisenden und keine Säuregruppe enthaltenden Carbonsäureamid, einem eine Doppelbindung aufweisenden und keine Säuregruppe enthaltenden Carbonsäureimid, sowie Mischungen daraus,
wobei die Säurezahl des Trägerstoffgemisches zwischen 5 und 100 liegt.

2. Eine mittels Strahlung härtbare Farbezusammensetzung gemäß Anspruch 1, dadurch gekennzeichnet, daß die Farbezusammensetzung weiterhin 0 bis 20 Gewichtsteile eines Photopolymerisationsinitiators, 0 bis 20 Gewichtsteile eines Photosensibilisators und 0 bis 50 Gewichtsprozent eines organischen und/oder anorganischen Pigments bezogen auf die gesamte Farbezusammensetzung enthält.

3. Eine mittels Strahlung härtbare Farbezusammensetzung gemäß Anspruch 1, dadurch gekennzeichnet, daß die Komponente (A) aus Oligomeren oder Polymeren ausgewählt ist, die mindestens eine Vinyl-, Allyl-, Methacryloyl-, Acryloyl- oder Crotonylgruppe aufweisen.

4. Eine mittels Strahlung härtbare Farbezusammensetzung gemäß Anspruch 1, dadurch gekennzeichnet, daß die Komponente (A) aus mindestens einem Oligomer oder Polymer besteht, die klassifiziert sind als Urethanmethacrylate oder -acrylate abgeleitet von einer gesättigten Polyesterpolyolverbindung, einer Polyisocyanatverbindung und einer Verbindung mit einer Methacryloyl- oder Acryloylgruppe und einer aktiven Wasserstoffgruppe als Ausgangsstoffe.

5. Eine mittels Strahlung härtbare Farbezusammensetzung gemäß Anspruch 4, dadurch gekennzeichnet, daß die gesättigte Polyesterpolyolverbindung aus einer Dicarbonsäurekomponente und einer Glykolkomponente synthetisiert ist, wobei die Dicarbonsäurekomponente mindestens aus einer aus der Gruppe ausgewählten Verbindung besteht, die sich zusammensetzt aus einer aromatischen Dicarbonsäure, einer aliphatischen Dicarbonsäure, einer alicyklischen Dicarbonsäure und einer heterocyklischen Dicarbonsäure, und die Glykolkomponente aus der Gruppe ausgewählt ist, die sich zusammensetzt aus einem Alkylenglykol, Dialkylenglykol, Cyclohexandimethanol, Spiroglykol, 1,4-Phenylenglykol, Bisphenol-A-Ethylenoxid oder Polyethylenoxid und Polyethylenglykol.

6. Eine mittels Strahlung härtbare Farbezusammensetzung gemäß Anspruch 4, dadurch gekennzeichnet, daß die Polyisocyanatverbindung mindestens eine aus der Gruppe ausgewählte Verbindung ist, die sich zusammensetzt aus 2,4-Trilendiisocyanat, Diphenylmethandiisocyanat, 1,3-Diisocyanatmethylcyclohexan, 1,4-Diisocyanatmethylcyclohexan, 4,4'-Diisocyanatdicyclohexan, 4,4'-Diisocyanatdicyclohexylmethan und Isophorondiisocyanat.

7. Eine mittels Strahlung härtbare Farbezusammensetzung gemäß Anspruch 4, dadurch gekennzeichnet, daß die Verbindung mit einer Methacryloyl- oder Acryloylgruppe und einer aktiven Wasserstoffgruppe mindestens eine aus der Gruppe ausgewählte Verbindung ist, die sich zusammensetzt aus zweiwertigem Alkoholmonomethacrylat oder -monoacrylat, dreiwertigem Alkoholmono- oder -dimethacrylat oder dreiwertigem Alkoholmono- oder -diacrylat, mehrwertigem Alkonolmethacrylat oder -acrylat, das mindestens eine Hydroxygruppe aufweist, einem mindestens eine Hydroxygruppe aufweisenden Methacrylat oder Acrylat eines Alkohols mit 4 oder mehr Hydroxygruppen, einer eine Hydroxygruppe enthaltenden Verbindung, abgeleitet aus der Bildung eines Methacrylats oder Acrylats aus einem Caprolactonderivat jedweder der oben angegebenen Alkoholverbindungen, und Epoxymethacrylaten oder -acrylaten, abgeleitet aus einer ringöffnenden Addition einer Methacryl- oder Acrylsäure mit einem Glycidyletherderivat aus zweiwertigen oder mehrwertigen Alkoholen oder phenolischen Hydroxygruppen enthaltenden Verbindungen.

8. Eine mittels Strahlung härtbare Farbezusammensetzung gemäß Anspruch 1, dadurch gekennzeichnet, daß die Komponente (B) mindestens ein aus der Gruppe ausgewähltes Monomer ist, die sich zusammensetzt aus Monomeren mit einer Vinylgruppe, Allylgruppe, Methacryloylgruppe oder Acryloylgruppe oder Crotonylgruppe und einer Carboxylgruppe, Sulfonylgruppe oder Phosphorylgruppe.

9. Eine mittels Strahlung härtbare Farbezusammensetzung gemäß Anspruch 1, dadurch gekennzeichnet, daß die Komponente (B) aus der Reaktion einer Verbindung, die eine Doppelbindung und eine Hydroxylgruppe im selben Molekül aufweist, mit einem cyklischen Säureanhydrid, entsprechend dem Hydroxyläquivalent, synthetisiert ist.

10. Eine mittels Strahlung härtbare Farbezusammensetzung gemäß Anspruch 1, dadurch gekennzeichnet, daß die Komponente (B) mindestens eine aus der Gruppe ausgewählte Verbindung ist, die sich zusammensetzt aus einem Alkylenoxidderivat aus einer säureanhydridcarboxylierten Methacryl- oder Acrylsäure, einem Caprolactonderivat aus einer säureanhydridcarboxylierten Methacryl- oder Acrylsäure, einem Monoglycidyletherderivat aus einer säureanhydridcarboxylierten Methacryl- oder Acrylsäure, einem säureanhydridcarboxylierten Methylolmethacryl- oder -acrylamid, Methacryloxyethylphosphat oder Acryloxy-ethylphosphat, Methacryloxyethylphosphorylpheny oder Acryloxyethylphosphorylphenyl, Dimethacryloxyethylphosphat oder Diacryloxyethylphosphat, Methacryloxyethylsulfonat oder Acryloxyethylsulfonat und Dimethacryloxyethylsuccinylsulfonat oder Diacryloxyethylsuccinylsulfonat.

11. Eine mittels Strahlung härtbare Farbezusammensetzung gemäß Anspruch 10, dadurch gekennzeichnet, daß die Säureanhydridkomponente mindestens eine aus der Gruppe ausgewählte Verbindung ist, die sich zusammensetzt aus gesättigten oder ungesättigten aliphatischen Dicarbonsäureanhydriden, alicyklischen Dicarbonsäureanhydriden, aromatischen Dicarbonsäuranhydriden und Tricarbonsäureanhydriden.

12. Eine mittels Strahlung härtbare Farbezusammensetzung gemäß Anspruch 10, dadurch gekennzeichnet, daß die Säureanhydridkomponente ein Bernsteinsäureanhydrid, Maleinsäureanhydrdid, Dodecylsuccinanhydrid, Phthalsäureanhydrid, Tetrahydrophthalsäureanhydrid oder eine Mischung aus mindestens zwei dieser Anhydride ist.

13. Eine mittels Strahlung härtbare Farbezusammensetzung gemäß Anspruch 1, dadurch gekennzeichnet, daß die Komponente (C) mindestens ein Polycarbonsäureester ist, wobei 2 bis 10 Säuregruppen vorhanden sind und mindestens zwei Doppelbindungen an den Carbonsäureester gekoppelt sind, der aus der Gruppe ausgewählt ist, die sich zusammensetzt aus Polycarbonsäureestern, die mindestens zwei Vinylgruppen, Allylgruppen, Methacryloylgruppen oder Acryloylgruppen oder Crotonylgruppen enthalten und 2 bis 10 Carboxylgruppen, Sulfonylgruppen oder Phosphorylgruppen.

14. Eine mittels Strahlung härtbare Farbezusammensetzung gemäß Anspruch 1, dadurch gekennzeichnet, daß die Komponente (C) aus der Reaktion eines Epoxyacrylats oder -methacrylats mit einem cyklischen Säureanhydrid synthetisiert ist, wobei das Epoxyacrylat oder -methacrylat durch die ringöffnende Veresterung einer Polyepoxyverbindung und einer Methacrylsäure oder Acrylsäure erzeugt ist.

15. Eine mittels Strahlung härtbare Farbezusammensetzung gemäß Anspruch 14, dadurch gekennzeichnet, daß das Epoxyacrylat oder -methacrylat mindestens eine aus der Gruppe ausgewählte Verbindung ist, die sich zusammensetzt aus einem Methacryl- oder Acrylsäurederivat aus Neopentylglykoldiglycidylether, einem Methacryl- oder Acrylsäurederivat aus 1,6-Hexandioldiglycidylether, einem Methacryloder Acrylsäurederivat aus Trimethylolpropantriglycidylether, einem Methacryl- oder Acrylsäurederivat aus Bisphenol-A-Glycidylether, einen Methacryl- oder Acrysäurederivat aus Epoxyphenolnovolak und einem Methacryl- oder Acrylsäurederivat aus Phthalsäurediglycidylester.

16. Eine mittels Strahlung härtbare Farbezusammensetzung gemäß Anspruch 14, dadurch gekennzeichnet, daß die Säureanhydridkomponente ein Bernsteinsäureanhydrid, Maleinsäureanhydrid, Dodecylsuccinanhydrid, Phthalsäureanhydrid, Trimellitsäureanhydrid, Tetrahydrophtalsäureanhydrid oder eine Mischung aus mindestens zwei dieser Anhydride ist.

17. Eine mittels Strahlung härtbare Farbezusammensetzung gemäß Anspruch 1, wobei der Doppelbindungen aufweisende, fluorierte Carbonsäureester für die Komponente (D) ein fluorierter, Alkoholrückstände aufweisender Ester oder ein fluoriertes Makromonomer ist, wobei die Hauptkette eine fluorierte Gruppe aufweist und die Seitenkette eine gekoppelte Acryloyl- oder Methacryloyl-gruppe ist.

18. Eine mittels Strahlung härbare Farbezusammensetzung gemäß Anspruch 1, dadurch gekennzeichnet, daß der Carbonsäureester für die Komponente (D) mindestens ein Methacrylat- oder Acrylatester ist, der aus der Gruppe ausgewählt ist, die aus Trifluoroethylmethacrylat oder -acrylat, Tetrafluoropropylmethacrylat oder -acrylat, Octafluoropentylmethacrylat oder -acrylat und Heptadecafluorodecylmethacrylat oder -acrylat besteht.

19. Eine mittels Strahlung härtbare Farbezusammensetzung gemäß Anspruch 1, dadurch gekennzeichnet, daß der Carbonsäureester für die Komponente (D) in einem Bereich von 1 bis 20 Gewichtsteilen bezogen auf 100 Teile des Trägerstoffgemisches verwendet ist.

20. Eine mittels Strahlung härtbare Farbezusammensetzung gemäß Anspruch 1, dadurch gekennzeichnet, daß das Blockcopolymer bestehend aus einem fluorierte Alkylgruppen enthaltenden Polymersegment und einem Methacryl- oder Acrylpolymersegment in einem Verhältnis von 1 bis 10 Gewichtstellen bezogen auf 100 Teile des Trägerstoffgemisches verwendet ist.

21. Eine mittels Strahlung härtbare Farbezusammensetzung gemäß Anspruch 1, dadurch gekennzeichnet, daß das Blockopolymer, welches ein Siloxangruppen enthaltendes Polymersegment und ein Methacryl- oder Acrylpolymersegment aufweist, in einem Verhältnis von 0,5 bis 10 Gewichtsteilen bezogen auf 100 Teile des Trägerstoffgemisches verwendet wird.

22. Eine mittels Strahlung härtbare Farbezusammensetzung gemäß Anspruch 1, dadurch gekennzeichnet, daß die Komponente (D) eine Mischung aus zwei oder drei aus der Gruppe gewählten Bestandteilen ist, die sich zusammensetzt aus
(1) einem Doppelbindung aufweisenden, fluorierten Carbonsäureester,
(2) einem Blockcopolymer, welches ein fluorierte Alkylgruppen enthaltendes Polymersegment und ein Acrylpolymersegment aufweist, und
(3) einem Blockcopolymer, welches ein Siloxangruppen enthaltendes Polymersegment und ein Methacryl- oder Acrylpolymersegment aufweist.

23. Eine mittels Strahlung härtbare Farbezusammensetzung gemäß Anspruch 22, dadurch gekennzeichnet, daß die gesamte Menge der drei genannten Bestandteile in einem Bereich von 1 bis 10 Gewichtsteilen bezogen auf 100 Teile des Trägerstoffgemisches liegt.

24. Eine mittels Strahlung härtbare Farbezusammensetzung gemäß Anspruch 1, dadurch gekennzeichnet, daß die Komponente (E) mindestens eine aus der Gruppe gewählte Verbindung ist, die sich zusammensetzt aus zweiwertigen Alkoholdimethacrylaten oder -diacrylaten, dreiwertigen Alkoholtrimethacrylaten oder -triacrylaten, mehrwertigen Alkoholmethacrylaten oder -acrylaten, Epoxymethacrylaten oder -acrylaten, Urethanmethacrylaten oder -acrylaten, Polyester-methacrylaten oder acrylaten, Polyethermethacrylaten oder -acrylaten, Polybutadienpolyolurethanmethacrylaten oder -acrylaten und Polybutadienpolyolmethacrylaten oder -acrylaten.

25. Eine mittels Strahlung härtbare Farbezusammensetzung gemäß Anspruch 1, dadurch gekennzeichnet, daß die Komponente (F) aus der Gruppe ausgewählt ist, die sich zusammensetzt aus 2-Ethylhexylmethacrylat oder -acrylat, Cyclohexylmethacrylat oder -acrylat, Dicyclopentanylmethacrylat oder -acrylat, Benzylmethacrylat oder -acrylat, Phenoxyethylmethacrylat oder -acrylat, Tolyloxyethylmethacrylat oder -acrylat, Ethoxyethylmethacrylat oder -acrylat, Ethylcarbitolmethacrylat oder -acrylat, Isobornylmethacrylat oder -acrylat, Methoxypropylenglykolmethacrylat oder -acrylat, Methacryloylmorpholin, Acryloylmorpholin, *N*-Vinylpyrrolidon, *N*-Vinylcaprolactam, *N*,*N*-Diethylaminoethylmethacrylat oder -acrylat, *t*-Butylaminoethylmethacrylat oder -acrylat, 2-Hydroxyethylmethacrylat oder -acrylat, 2-Hydroxypropylmethacrylat oder -acrylat, 3-Butoxy-2-Hydroxypropylmethacrylat oder -acrylat, caprolacton-modifiziertem 2-Hydroxyethylmethacrylat oder -acrylat, 3-Phenoxy-2-Hydroxypropylmethacrylat oder -acrylat, Glycidylmethacrylat oder -acrylat und ethylenoxid-modifiziertem, butoxyliertem Phosphorsäuremethacrylat oder -acrylat.

## Revendications

1. Composition d'encre durcissable sous l'effet d'un rayonnement, qui comprend un mélange de véhicules comprenant :
(A) au moins un ingrédient choisi dans le groupe comprenant les oligomères de polyesters linéaires essentiellement exempts de groupes acides et exempts de doubles liaisons polymérisables sur la chaîne polyester linéaire, où de 1 à 10 doubles liaisons sont en position latérale par rapport à la chaîne polyester linéaire ; les polymères de polyesters linéaires essentiellement exempts de groupes acides et exempts de doubles liaisons polymérisables sur la chaîne polyester linéaire, où de 1 à 10 doubles liaisons sont en position latérale par rapport à la chaîne polyester linéaire ; et leurs mélanges,
(B) au moins un ingrédient choisi dans le groupe comprenant les acides carboxyliques contenant une double liaison, où l'acide possède au moins un groupe acide, les esters desdits acides carboxyliques, les amides desdits acides carboxyliques et leurs mélanges,
(C) un ester d'un acide polycarboxylique contenant une double liaison, où de 2 à 10 groupes acides sont présents, et au moins 2 doubles liaisons sont en position latérale par rapport à l'ester d'acide carboxylique ayant de 2 à 10 groupes acides,
(D) au moins un ingrédient choisi dans le groupe comprenant les esters d'acides carboxyliques fluorés ayant une double liaison, les copolymères séquences comprenant un segment polymère contenant un groupe alkyle fluoré et un segment polymère méthacrylique ou acrylique, les copolymères séquences comprenant un segment polymère contenant un groupe siloxane et un segment polymère méthacrylique ou acrylique, et leurs mélanges,
(E) un ester d'acide carboxylique contenant une double liaison, ayant au moins 2 doubles liaisons et exempt de groupes acides, à la condition qu'il soit exclu du composant (A) mentionné ci-dessus, et
(F) au moins un ingrédient choisi dans le groupe comprenant les esters d'acides carboxyliques contenant une double liaison et exempts de groupes acides ; un carboxamide contenant une double liaison et exempt de groupes acides ; un carboximide contenant une double liaison et exempt de groupes acides ; et leurs mélanges,
où l'indice d'acide du mélange de véhicules est de 5 à 100.

2. Composition d'encre durcissable sous l'effet d'un rayonnement, caractérisée en ce que la composition d'encre comprend en outre de 0 à 20 parties en poids d'un amorceur de photopolymérisation, de 0 à 20 parties en poids d'un photosensibilisateur, et de 0 à 50 % en poids d'un pigment organique et/ou minéral par rapport à la totalité de la composition d'encre.

3. Composition d'encre durcissable sous l'effet d'un rayonnement selon la revendication 1, caractérisée en ce que le composant (A) est choisi parmi les oligomères ou polymères qui contiennent au moins un groupe vinyle, allyle, méthacryloyle, acryloyle ou crotonyle.

4. Composition d'encre durcissable sous l'effet d'un rayonnement selon la revendication 1, caractérisée en ce que le composant (A) est au moins un oligomère ou un polymère classé parmi les méthacrylates ou acrylates d'uréthanne qui dérivent d'un composé polyesterpolyol linéaire exempt de doubles liaisons polymérisables sur la chaîne polyol linéaire, un composé polyisocyanate, et un composé ayant un groupe méthacryloyle ou acryloyle et un groupe hydrogène actif en tant que composés de départ.

5. Composition d'encre durcissable sous l'effet d'un rayonnement selon la revendication 4, caractérisée en ce que le composé polyesterpolyol linéaire est synthétisé à partir d'un composant acide dicarboxylique et d'un composant glycol, où le composant acide dicarboxylique est au moins un composé choisi dans le groupe comprenant les acides dicarboxyliques aromatiques, les acides dicarboxyliques aliphatiques, les acides dicarboxyliques alicycliques et les acides dicarboxyliques hétérocycliques, et le composant glycol est choisi dans le groupe comprenant les alkylèneglycols, les dialkylèneglycols, le cyclohexanediméthanol, le spiroglycol, le 1,4-phényléneglycol, le bisphénol A, l'oxyde d'éthylène ou le poly(oxyde d'éthylène), et le polyéthyléneglycol.

6. Composition d'encre durcissable sous l'effet d'un rayonnement selon la revendication 4, caractérisée en ce que le composé polyisocyanate est au moins un composé choisi dans le groupe comprenant le diisocyanate de 3,4-toluylène, le diisocyanate de diphénylméthane, le 1,3-diisocyanato-méthylcyclohexane, le 1,4-diisocyanatométhylcyclohexane, le 4,4'-diisocyanato-dicyclohexane, le 4,4'-diisocyanato-dicylohexylméthane et le diisocyanate d'isophorone.

7. Composition d'encre durcissable sous l'effet d'un rayonnement selon la revendication 4, caractérisée en ce que le composé ayant un groupe méthacryloyle ou acryloyle et un groupe hydrogène actif est au moins un composé choisi dans le groupe comprenant les monométhacrylates ou monoacrylates de dialcools, les mono- ou diméthacrylates ou mono- ou diacrylates de trialcools, les méthacrylates ou acrylates de polyalcools ayant au moins un groupe hydroxy, les méthacrylates ou acrylates, contenant au moins un groupe hydroxy, d'alcools contenant au moins 4 groupes hydroxy, les composés hydroxylés obtenus par méthacrylation ou acrylation d'un dérivé de caprolactone de l'un quelconque des composés alcool mentionnés ci-dessus, et les époxy-méthacrylates ou -acrylates obtenus par addition par décyclisation d'un acide méthacrylique ou acrylique avec un dérivé d'un éther glycidylique de dialcools ou de polyalcools, ou de composés contenant des groupes hydroxy phénoliques.

8. Composition d'encre durcissable sous l'effet d'un rayonnement selon la revendication 1, caractérisée en ce que le composant (B) est au moins un monomère choisi dans le groupe comprenant les monomères qui contiennent un groupe vinyle, un groupe allyle, un groupe méthacryloyle, un groupe acryloyle ou un groupe crotonyle, et un groupe carboxyle, un groupe sulfonyle ou un groupe phosphoryle.

9. Composition d'encre durcissable sous l'effet d'un rayonnement selon la revendication 1, caractérisée en ce que le composant (B) est synthétisé par réaction d'un composé ayant dans la même molécule une double liaison et un groupe hydroxyle, avec un anhydride d'acide cyclique correspondant à son équivalent hydroxyle.

10. Composition d'encre durcissable sous l'effet d'un rayonnement selon la revendication 1, caractérisée en ce que le composant (B) est au moins un composé choisi dans le groupe comprenant les dérivés oxyalkylénés de l'acide méthacrylique ou de l'acide acrylique carboxylé par un anhydride d'acide, les dérivés de caprolactone de l'acide méthacrylique ou acrylique carboxylé par un anhydride d'acide, les dérivés éthers monoglycidyliques de l'acide méthacrylique ou de l'acide acrylique carboxylé par un anhydride d'acide, les méthylolméthacrylamides ou méthylolacrylamides carboxylés par un anhydride d'acide, les méthacryloxyéthylphosphates ou acryloxyéthylphosphates, le méthacryloxyéthylphosphorylphényle ou l'acryloxyéthylphosphorylphényle, les diméthacryloxyéthylphosphates ou diacryloxyéthylphosphates, les méthacryloxyéthylsulfonates ou les acryloxyéthylsulfonates, et les diméthacryloxyéthylsuccinylsulfonates ou diacryloxyéthylsuccinylsulfonates.

11. Composition d'encre durcissable sous l'effet d'un rayonnement selon la revendication 10, caractérisée en ce que le composant anhydride d'acide est au moins un composé choisi dans le groupe comprenant les anhydrides dicarboxyliques aliphatiques saturés ou insaturés, les anhydrides dicarboxyliques alicycliques, les anhydrides dicarboxyliques aromatiques et les anhydrides tricarboxyliques.

12. Composition d'encre durcissable sous l'effet d'un rayonnement selon la revendication 10, caractérisée en ce que le composant anhydride d'acide est l'anhydride succinique, l'anhydride maléique, l'anhydride dodécylsuccinique, l'anhydride phtalique, l'anhydride tétrahydrophtalique ou un mélange d'au moins deux de ces anhydrides.

13. Composition d'encre durcissable sous l'effet d'un rayonnement selon la revendication 1, caractérisée en ce que le composant (C) est au moins un ester d'un acide polycarboxylique dans lequel de 2 à 10 groupes acides sont présents et au moins deux doubles liaisons sont en position latérale par rapport à l'ester d'acide carboxylique, choisi dans le groupe comprenant les esters d'acides polycarboxyliques qui contiennent au moins deux groupes vinyle, groupes allyle, groupes méthacryloyle, groupes acryloyle ou groupes crotonyle, et de 2 à 10 groupes carboxyle, groupes sulfonyle ou groupes phosphoryle.

14. Composition d'encre durcissable sous l'effet d'un rayonnement selon la revendication 1, caractérisée en ce que le composant (C) est synthétisé par réaction d'un époxyacrylate ou d'un époxyméthacrylate avec un anhydride d'acide cyclique, où l'époxyacrylate ou l'époxyméthacrylate est obtenu par estérification par décyclisation d'un composé polyépoxydé et d'un acide méthacrylique ou d'un acide acrylique.

15. Composition d'encre durcissable sous l'effet d'un rayonnement selon la revendication 14, caractérisée en ce que l'époxyacrylate ou l'époxyméthacrylate est au moins un composé choisi dans le groupe comprenant les dérivés d'acides méthacryliques ou acryliques de l'éther diglycidylique du néopentylglycol, les dérivés d'acides méthacryliques ou acryliques de l'éther diglycidyliques du 1,6-hexanediol, les dérivés d'acides méthacryliques ou acryliques de l'éther triglycidylique du triméthylolpropane, les dérivés d'acides méthacryliques ou acryliques de l'éther glycidylique du bisphénol A, les dérivés d'acides méthacryliques ou d'acides acryliques d'une novolaque d'époxyphénol, et les dérivés d'acides méthacryliques ou acryliques du phtalate de diglycidyle.

16. Composition d'encre durcissable sous l'effet d'un rayonnement selon la revendication 14, caractérisée en ce que le composant anhydride d'acide est l'anhydride succinique, l'anhydride maléique, l'anhydride dodécylsuccinique, l'anhydride phtalique, l'anhydride trimellitique, l'anhydride tétrahydrophtalique ou un mélange d'au moins deux de ces anhydrides.

17. Composition d'encre durcissable sous l'effet d'un rayonnement selon la revendication 1, dans laquelle l'ester d'acide carboxylique fluoré contenant une double liaison et correspondant au composant (D) est un ester contenant un résidu alcoolique fluoré ou un macromonomère fluoré, dans lequel la chaîne principale possède un groupe fluoré et la chaîne latérale est un groupe acryloyle ou méthacryloyle latéral.

18. Composition d'encre durcissable sous l'effet d'un rayonnement selon la revendication 1, caractérisée en ce que l'ester d'acide carboxylique fluoré correspondant au composant (D) est au moins un ester méthacrylate ou acrylate choisi dans le groupe comprenant le méthacrylate ou l'acrylate de trifluoréthyle, le méthacrylate ou l'acrylate de tétrafluoropropyle, le méthacrylate ou l'acrylate d'octafluoropentyle, et le méthacrylate ou l'acrylate d'heptadécafluorodécyle.

19. Composition d'encre durcissable sous l'effet d'un rayonnement selon la revendication 1, caractérisée en ce que l'ester d'acide carboxylique correspondant au composant (D) est combiné en une quantité de 1 à 20 parties en poids pour 100 parties en poids du mélange de véhicules.

20. Composition d'encre durcissable sous l'effet d'un rayonnement selon la revendication 1, caractérisée en ce que le copolymère séquéncé comprenant un segment polymère contenant un groupe alkyle fluoré et un segment polymère méthacrylique ou acrylique est combiné en une quantité comprise entre 1 et 10 parties en poids pour 100 parties en poids du mélange de véhicules.

21. Composition d'encre durcissable sous l'effet d'un rayonnement selon la revendication 1, caractérisée en ce que le copolymère comprenant un segment polymère contenant un groupe siloxane et un segment polymère méthacrylique ou acrylique est combiné en une quantité comprise entre 0,5 et 10 parties en poids pour 100 parties en poids du mélange de véhicules.

22. Composition d'encre durcissable sous l'effet d'un rayonnement selon la revendication 1, caractérisée en ce que le composant (D) est un mélange de deux ou trois membres choisis dans le groupe comprenant
(1) les esters d'acides carboxyliques fluorés contenant une double liaison,
(2) les copolymères séquencés qui comprennent un segment polymère contenant un groupe alkyle fluoré et un segment polymère méthacrylique ou acrylique, et
(3) les copolymères séquencés qui comprennent un segment polymère contenant un groupe siloxane et un segment polymère méthacrylique ou acrylique.

23. Composition d'encre durcissable sous l'effet d'un rayonnement selon la revendication 22, caractérisée en ce que la quantité totale desdits trois composants est comprise entre 1 et 10 parties en poids pour 100 parties en poids du mélange de véhicules.

24. Composition d'encre durcissable sous l'effet d'un rayonnement selon la revendication 1, caractérisée en ce que le composant (E) est au moins un composé choisi dans le groupe comprenant les diméthacrylates ou diacrylates de dialcools, les triméthacrylates ou triacrylates de trialcools, les méthacrylates ou acrylates de polyalcools, les époxyméthacrylates ou époxyacrylates, les uréthanneméthacrylates ou uréthanne-acrylates, les méthacrylates ou acrylates de polyester, les méthacrylates ou acrylates de polyéthers, les uréthanneméthacrylates ou uréthanneacrylates de polybutadiènepolyol, et les méthacrylates ou acrylates de polybutadiènepolyol.

25. Composition d'encre durcissable sous l'effet d'un rayonnement selon la revendication 1, caractérisée en ce que le composant (F) est choisi dans le groupe comprenant le méthacrylate ou l'acrylate de 2-éthylhexyle, le méthacrylate ou l'acrylate de cyclohexyle, le méthacrylate ou l'acrylate de dicyclopentanyle, le méthacrylate ou l'acrylate de benzyle, le méthacrylate ou l'acrylate de phénoxyéthyle, le méthacrylate ou l'acrylate de tolyloxyéthyle, le méthacrylate ou l'acrylate d'éthoxyéthyle, le méthacrylate ou l'acrylate d'éthylcarbitol, le méthacrylate ou l'acrylate d'isobornyle, le méthacrylate ou l'acrylate de méthoxypropylèneglycol, la méthacryloylmorpholine, l'acryloylmorpholine, la N-vinylpyrrolidone, le N-vinylcaprolactame, le méthacrylate ou l'acrylate de N,N-diéthylaminoéthyle, le méthacrylate ou l'acrylate de tert-butylaminoéthyle, le méthacrylate ou l'acrylate de 2-hydroxyéthyle, le méthacrylate ou l'acrylate de 2-hydroxypropyle, le méthacrylate ou l'acrylate de 3-butoxy-2-hydroxypropyle, le méthacrylate ou l'acrylate de 2-hydroxyéthyle modifié par la caprolactone, le méthacrylate ou l'acrylate de 3-phénoxy-2-hydroxypropyle, le méthacrylate ou l'acrylate de glycidyle, et le méthacrylate ou l'acrylate de l'acide phosphorique butoxylé modifié par l'oxyde d'éthylène.
